(19) Europäisches Patentamt / European Patent Office / Office européen des brevets

(11) **EP 4 035 977 B1**

(12) **EUROPEAN PATENT SPECIFICATION**

(45) Date of publication and mention
of the grant of the patent:
**29.11.2023 Bulletin 2023/48**

(21) Application number: **20878391.0**

(22) Date of filing: **23.10.2020**

(51) International Patent Classification (IPC):
**B62H 7/00** *(2006.01)*        **B62K 5/10** *(2013.01)*
**B62J 45/40** *(2020.01)*        **B62J 50/22** *(2020.01)*

(52) Cooperative Patent Classification (CPC):
**B62J 50/22; B62H 7/00; B62J 45/41**

(86) International application number:
**PCT/JP2020/039948**

(87) International publication number:
**WO 2021/079996 (29.04.2021 Gazette 2021/17)**

(54) **LEANING-VEHICLE-REAL-TIME-INFORMATION-PRESENTATION-CONTROL APPARATUS**

NEIGEFAHRZEUG STEUERVORRICHTUNG ZUR ECHTZEITINFORMATIONSDARSTELLUNG

APPAREIL DE COMMANDE DE PRÉSENTATION D'INFORMATIONS EN TEMPS RÉEL DE VÉHICULE INCLINABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2019 PCT/JP2019/041937**

(43) Date of publication of application:
**03.08.2022 Bulletin 2022/31**

(73) Proprietor: **Yamaha Hatsudoki Kabushiki Kaisha
Iwata-shi, Shizuoka 438-8501 (JP)**

(72) Inventor: **MORISHIMA, Keisuke
Iwata-shi, Shizuoka 438-8501 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**WO-A1-2013/099246        WO-A1-2013/128919
JP-A- 2013 166 555        JP-A- 2014 008 789
JP-A- 2014 108 750        JP-A- 2015 071 329
JP-A- 2017 094 121        JP-B2- 3 516 986**

**Description**

TECHNICAL FIELD

The present teaching relates to a leaning-vehicle-real-time-information-presentation-control apparatus.

BACKGROUND ART

Patent Document 1 proposes an apparatus for use in enhancing a driving skill of a leaning vehicle. Patent Document 1 discloses an apparatus for presenting an evaluation result of a driving skill to a rider by voice during traveling of a leaning vehicle.

Enhancement of the driving skill of the leaning vehicle is promoted by presenting an evaluation result of the driving skill to a rider by voice during traveling of the leaning vehicle. The leaning-vehicle-real-time-information-presentation-control apparatus disclosed in Patent Document 1 described above presents an evaluation result of a driving skill acquired by processing traveling data of a leaning vehicle during traveling, in real time by voice while the leaning vehicle is traveling.

CITATION LIST

PATENT DOCUMENT

Patent Document 1: Japanese Patent No. 6146865

SUMMARY OF INVENTION

TECHNICAL PROBLEM

Document WO2013099246 shows the preamble of claim 1.

In Patent Document 1 described above, the leaning-vehicle-real-time-information-presentation-control apparatus performs processing so as to present an evaluation result of a driving skill acquired by processing traveling data of a leaning vehicle during traveling in real time while the leaning vehicle is traveling. The leaning-vehicle-real-time-information-presentation-control apparatus, however, performs data processing in real time, and thus, has a heavy load of data processing. In view of this, the leaning-vehicle-real-time-information-presentation-control apparatus employs hardware having a high processing capacity.

A leaning vehicle generally has a narrower effective visual field of a rider than a four-wheeled vehicle. To present information to a rider during traveling of a leaning vehicle having such a relatively narrow effective visual field, the leaning-vehicle-real-time-information-presentation-control apparatus is required to enhance a recognition rate of information presented during traveling. In the leaning-vehicle-real-time-information-presentation-control apparatus of Patent Document 1 described above, control is performed such that the timing of presenting an evaluation result of a driving skill is including in a period of traveling of the leaning vehicle except for turning in order to enhance a recognition rate of presented information.

The leaning-vehicle-real-time-information-presentation-control apparatus described in Patent Document 1 described above controls the timing of presenting an evaluation result of a driving skill in order to enhance a recognition rate. In the leaning-vehicle-real-time-information-presentation-control apparatus described in Patent Document 1 described above, however, a data processing load that affects a processing capacity of hardware is not taken into account.

In the case of constituting a leaning-vehicle-real-time-information-presentation-control apparatus, however, it is required to suppress an increase in a data processing load that affects a processing capacity of hardware.

It is therefore an object of the present teaching to provide a leaning-vehicle-real-time-information-presentation-control apparatus capable of enhancing a recognition rate of an evaluation result of a driving skill presented during traveling of a leaning vehicle while suppressing an increase in a processing capacity of hardware by suppressing an increase in a data processing load.

SOLUTION TO PROBLEM

The inventor of the present teaching intensively studied control for presenting an evaluation result of a driving skill acquired by processing traveling data of the leaning vehicle during traveling in real time while the leaning vehicle is traveling.

A conventional leaning-vehicle-real-time-information-presentation-control apparatus performs control such that the timing of presenting an evaluation result of a driving skill is included in a period of traveling of the leaning vehicle except for turning in order to enhance a recognition rate of presented information.

In other words, the conventional leaning-vehicle-real-time-information-presentation-control apparatus is configured based on the technical idea of enhancing a recognition rate of information by controlling the timing of presenting information during traveling of the leaning vehicle.

Based on a technical idea different from the conventional idea, the inventor of the present teaching studied control that can be combined with the control based on the conventional technical idea. The technical idea different from the conventional idea is a technical idea of enhancing an information recognition rate while suppressing an increase in a data processing load by performing control such that characteristics of information presented during traveling of a leaning vehicle is information easily recognizable even during traveling of the leaning vehicle.

As a result of the study, the inventor of the present teaching found that information presented during traveling of the leaning vehicle is preferably information indicating the direction of a minute change in an evaluation result of a driving skill. This is based on the following findings obtained through the study.

A change of an operation input to a vehicle during traveling by a rider who intends to enhance the driving skill is often minute. Thus, an evaluation result is preferably also presented with a change in accordance with such a minute change of the operation input. The direction indicating whether the evaluation result is in a good direction or not is preferably presented by a minute change of the operation input as described above.

The control by the conventional leaning-vehicle-real-time-information-presentation-control apparatus was control for evaluation using an evaluation criterion based on traveling data of a plurality of riders having various levels of driving skills. Thus, the evaluation result using the evaluation criterion based on traveling data of the plurality of riders having various levels of driving skills is information indicating a relative positional relationship (position) as a comparison with riders having various levels of driving skills.

Accordingly, in a case where traveling data of a rider having a low driving skill is evaluated by using the evaluation criterion, for example, the same evaluation result is presented to the rider at any time. In other words, the evaluation result hardly changes with respect to a minute change of an operation input by the rider. Information presented to a rider is information with which the direction of a change of an evaluation result by a minute change of an operation input by the rider is unknown.

On the other hand, the inventor of the present teaching conceived that a criterion for use in evaluation is changed to a criterion based on traveling data of a rider himself/herself representing a skill of the rider during traveling or a most recent skill of the rider, without considerably changing the control itself. Through the study, the inventor found that a result of evaluation using the criterion based on the traveling data of the rider himself/herself reflects a minute change of an operation input and also reflects the direction of the evaluation result. In addition, the inventor also found that an increase in a data processing load can be suppressed by changing the criterion for use in evaluation as described above.

Through the foregoing study, the inventor of the present teaching has completed a leaning-vehicle-real-time-information-presentation-control apparatus capable of enhancing a recognition rate of an evaluation result of a driving skill presented during traveling of the leaning vehicle while suppressing an increase in a processing capacity of hardware by suppressing an increase in a data processing load.

Through the foregoing study, the inventor of the present teaching has arrived at the configuration described below.

The leaning-vehicle-real-time-information-presentation-control apparatus according to one embodiment of the present teaching is a leaning-vehicle-real-time-information-presentation-control apparatus configured to present an evaluation result of a driving skill of a rider during traveling of a leaning vehicle, the leaning vehicle including a vehicle body configured to lean leftward when turning to the left and lean rightward when turning to the right and an operation input device configured to be operated by the rider, and the leaning-vehicle-real-time-information-presentation-control apparatus includes: an individual-driving-skill-criterion setter configured to acquire driving-skill-criterion-setting-individual-traveling data concerning a vehicle state of the leaning vehicle that varies by an operation of the operation input device by the rider during leftward turning in which the vehicle body leans leftward or during rightward turning in which the vehicle body leans rightward, the individual-driving-skill-criterion setter being configured to set an individual-driving-skill criterion representing an individual driving skill based on the acquired driving-skill-criterion-setting-individual-traveling data; an individual-driving-skill-evaluation-result creator configured to acquire evaluation-individual-traveling data concerning a vehicle state that varies by an operation of the operation input device by the rider after the driving-skill-criterion-setting-individual-traveling data has been acquired and during leftward turning in which the vehicle body leans leftward or during rightward turning in which the vehicle body leans rightward, the individual-driving-skill-evaluation-result creator being configured to evaluate the acquired evaluation-individual-traveling data based on the individual-driving-skill criterion to thereby create an individual-driving-skill-evaluation result of the evaluation during the traveling of the leaning vehicle including leftward turning in which the vehicle body leans leftward or rightward turning in which the vehicle body leans rightward; and an output controller configured to acquire the individual-driving-skill-evaluation result during the traveling of the leaning vehicle including leftward turning in which the vehicle body leans leftward or rightward turning in which the vehicle body leans rightward, the output controller being configured to output the acquired individual-driving-skill-evaluation result to at least one of an auditory device, a tactile device, or a vision device during the traveling of the leaning vehicle including leftward turning in which the vehicle body leans leftward or rightward turning in which the vehicle body leans rightward.

With this configuration, since the individual-driving-skill criterion is set based on traveling data of the rider himself/herself, the data volume for acquiring the individual-driving-skill criterion can be reduced. Accordingly, a data processing load is reduced so that an increase in a processing capacity of hardware can be suppressed. In addition, the evaluation-individual-traveling data concerning the vehicle state that varies by an operation of the operation input device by the rider is evaluated based on the individual-driving-skill criterion, thereby making it possible to obtain an evaluation result reflecting a minute change of an operation input by the rider and also reflecting the direction of the evaluation result. Further, the leaning-vehicle-real-time-information-presentation-control apparatus outputs an individual-driving-skill-evaluation result acquired during traveling of the leaning vehicle including leftward turning in which the vehicle body leans leftward or rightward turning in which the vehicle body leans rightward, to at least one of the auditory device, the tactile device, or the vision device while the leaning vehicle is traveling. Accordingly, it is possible to enhance a recognition rate of an evaluation result of a driving skill presented during traveling of the leaning vehicle.

The acquisition of the driving-skill-criterion-setting-individual-traveling data includes the case of acquiring traveling data of the leaning vehicle in a predetermined period and extracting necessary data from the acquired traveling data as driving-skill-criterion-setting-individual-traveling data and the case of acquiring only necessary data from traveling data of the leaning vehicle as driving-skill-criterion-setting-individual-traveling data.

In another aspect, the leaning-vehicle-real-time-information-presentation-control apparatus according to the present teaching preferably includes the following configuration. The individual-driving-skill-criterion setter sets the individual-driving-skill criterion based on at least one evaluation result of the driving-skill-criterion-setting-individual-traveling data.

The individual-driving-skill criterion is set based on traveling data indicating a driving skill of the rider in driving the leaning vehicle. Accordingly, the individual-driving-skill-evaluation result that is a result of evaluation using the individual-driving-skill criterion reflects a minute change of an operation input by the rider and also reflects the direction of the evaluation result. Thus, the rider can easily recognize improvement of the driving skill.

In another aspect, the leaning-vehicle-real-time-information-presentation-control apparatus according to the present teaching preferably includes the following configuration. The individual-driving-skill-criterion setter sets the individual-driving-skill criterion based on a plurality of evaluation results of the driving-skill-criterion-setting-individual-traveling data.

The individual-driving-skill criterion is set based on a plurality of evaluation results of the rider himself/herself. Thus, an evaluation result corresponding to a current skill of the rider can be obtained as the individual-driving-skill-evaluation result.

In another aspect, the leaning-vehicle-real-time-information-presentation-control apparatus according to the present teaching preferably includes the following configuration. The individual-driving-skill-criterion setter sets the individual-driving-skill criterion based on the driving-skill-criterion-setting-individual-traveling data acquired during the traveling of the leaning vehicle or acquired during traveling of the leaning vehicle before the traveling.

The individual-driving-skill criterion is set based on a driving skill of the rider during traveling of the leaning vehicle or a most recent driving skill of the rider. By evaluating evaluation-individual-traveling data of the leaning vehicle using this individual-driving-skill criterion, an evaluation result with respect to a minute change of an operation input by the rider can be obtained. Accordingly, the rider can easily recognize improvement of the driving skill.

In another aspect, the leaning-vehicle-real-time-information-presentation-control apparatus according to the present teaching preferably includes the following configuration. The individual-driving-skill-criterion setter selects the individual-driving-skill criterion from previously stored driving skill criteria representing driving skill based on the driving-skill-criterion-setting-individual-traveling data, or sets the individual-driving-skill criterion based on an evaluation result created based on the driving-skill-criterion-setting-individual-traveling data.

The individual-driving-skill criterion is selected and set from previously stored driving skill criteria representing driving skill or is set based on an evaluation result created based on the driving-skill-criterion-setting-individual-traveling data. With this configuration, the individual-driving-skill criterion can be changed for each rider.

In another aspect, the leaning-vehicle-real-time-information-presentation-control apparatus according to the present teaching preferably includes the following configuration. The individual-driving-skill-criterion setter sets the individual-driving-skill criterion based on an evaluation result of evaluation on the driving-skill-criterion-setting-individual-traveling data by using a previously set individual-driving-skill criterion.

The individual-driving-skill criterion is set based on an evaluation result of evaluation on the driving-skill-criterion-setting-individual-traveling data by using a previously set individual-driving-skill criterion. Accordingly, the individual-driving-skill criterion can be a driving skill criterion based on a given past point of time of the rider.

In another aspect, the leaning-vehicle-real-time-information-presentation-control apparatus according to the present teaching preferably includes the following configuration. The output controller outputs the individual-driving-skill-evaluation result acquired during the traveling of the leaning vehicle to at least one of the auditory device, the tactile device, or the vision device during the traveling of the leaning vehicle, by means of information except for a numerical value.

The individual-driving-skill-evaluation result is presented by information except for numerical values during the traveling of the leaning vehicle. As a result, a recognition rate of the individual-driving-skill-evaluation result by the rider can be enhanced.

In another aspect, the leaning-vehicle-real-time-information-presentation-control apparatus according to the present teaching preferably includes the following configuration. The output controller outputs the individual-driving-skill-evaluation result acquired during the traveling of the leaning vehicle to at least one of the auditory device, the tactile device, or the vision device after the individual-driving-skill-evaluation result has been acquired and before the leaning vehicle enters a next turning state in the traveling of the leaning vehicle.

The individual-driving-skill-evaluation result is presented to the rider until a next turning state. As a result, a recognition rate of the individual-driving-skill-evaluation result by the rider can be enhanced.

In another aspect, the leaning-vehicle-real-time-information-presentation-control apparatus according to the present teaching preferably includes the following configuration. The output controller outputs the individual-driving-skill-evaluation result acquired during the traveling of the leaning vehicle to at least one of the auditory device, the tactile device, or the vision device from a turning state to a next turning state in the traveling of the leaning vehicle.

With this configuration, the individual-driving-skill-evaluation result is presented to the rider from a turning state to a next turning state. As a result, a recognition rate of the individual-driving-skill-evaluation result by the rider can be enhanced.

In another aspect, the leaning-vehicle-real-time-information-presentation-control apparatus according to the present teaching preferably includes the following configuration. The leaning-vehicle-real-time-information-presentation-control apparatus includes: a vehicle state detector configured to detect a vehicle state of the leaning vehicle; and a turning motion determiner configured to determine whether the leaning vehicle is turning or not, based on a detection result of the vehicle state detector.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

An embodiment of a leaning-vehicle-real-time-information-presentation-control apparatus according to the present teaching will be herein described.

In the following description, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

[Leaning Vehicle]

A leaning vehicle herein is a vehicle that turns in a leaning posture. Specifically, the leaning vehicle is a vehicle that leans leftward when turning to the left and leans rightward when turning to the right. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles, as well as two-wheeled vehicles.

The leaning vehicle may include a driving source that generates a driving force to be supplied to wheels and an accelerator operator as an input operator for operating an output of the driving source. The leaning vehicle may include a front suspension that elastically supports a front wheel to the vehicle body. The leaning vehicle may include a rear suspension that elastically supports a rear wheel to the vehicle body. The leaning vehicle may include a front-wheel-brake device that applies a braking force to the front wheel, and a front-wheel-brake operator that is an input operator for operating driving of the front-wheel-brake device. The leaning vehicle may include a rear-wheel-brake device that applies a braking force to a rear wheel, and a rear-wheel-brake operator that is an input operator for operating driving of the rear-wheel-brake device. The leaning vehicle may include a cooperative brake mechanism in which a front brake device and a rear brake device cooperate by operating the front brake operator or the rear brake operator.

The driving source includes an engine, a motor, a hybrid system including the engine and the motor, and so forth.

[Real-time-information Presentation]

The real-time-information presentation herein refers to presentation in which a result of data processing acquired by processing, during traveling of a leaning vehicle, data obtained during traveling of the leaning vehicle is presented while the leaning vehicle is traveling.

[Driving-skill-criterion-setting-individual-traveling Data]

Driving-skill-criterion-setting-individual-traveling data herein refers to traveling data for creating an individual-driving-skill criterion.

[Evaluation-individual-traveling Data]

Evaluation-individual-traveling data herein refers to traveling data for real-time evaluation while a vehicle is traveling.

[Traveling Data]

Traveling data herein refers to data of a physical quantity concerning a vehicle state obtained during traveling. The data of a physical quantity concerning a vehicle state includes at least one of a physical quantity concerning yaw motion, a physical quantity concerning roll motion, a physical quantity concerning pitch motion, a vehicle speed of a leaning vehicle, or an acceleration of a leaning vehicle.

[Individual-driving-skill Criterion]

An individual-driving-skill criterion herein refers to an evaluation result obtained by accumulating evaluation results evaluated by using a predetermined criterion based on driving-skill-criterion-setting-individual-traveling data and by calculating from a statistic of the accumulated evaluation results. The statistic here includes mean values (arithmetic mean, geometric mean, harmonic mean, and trimmed mean), a median, a mode, a maximum value, a minimum value, a percentile (e.g., quartile point), variances (sample variance and unbiased variance), a standard deviation, or a coefficient of variation. The statistic may include other values.

[Vehicle State]

A vehicle state herein includes at least one of a physical quantity concerning yaw motion, a physical quantity concerning roll motion, or a physical quantity concerning pitch motion, of a leaning vehicle acquired during traveling of the leaning vehicle. A vehicle state detector includes, for example, a gyro sensor that detects angular velocities in three-axis directions of yawing, rolling, and pitching of the leaning vehicle.

[Physical Quantity Concerning Yaw Motion]

A physical quantity concerning yaw motion herein includes at least one of a value of an angle of rotation (yaw angle) or a value of an angular velocity (yaw rate) representing a velocity of change of the rotation angle, in yawing (yaw motion) that is a rotation motion about an axis extending in the top-bottom direction of the vehicle body, for example. The physical quantity concerning yaw motion may include other parameters concerning yaw motion.

[Physical Quantity Concerning Roll Motion]

A physical quantity concerning roll motion herein includes at least one of a value of an angle of leaning (roll angle) or a value of an angular velocity representing a velocity of change of the leaning angle (roll rate), in rolling (roll motion) that is a rotation motion about an axis extending in the front-rear direction of the vehicle. The physical quantity concerning roll motion may include other parameters concerning roll motion.

[Physical Quantity Concerning Pitch Motion]

A physical quantity concerning pitch motion herein includes at least one of a value of an angle of tilting (pitch angle) or a value of an angular velocity representing a velocity of change of the tilting angle (pitch rate), in pitching (pitch motion) that is a rotation motion about an axis extending in the left-right direction of the vehicle. The physical quantity concerning pitch motion may include other parameters concerning pitch motion.

[Individual-driving-skill Evaluation]

Individual-driving-skill evaluation herein refers to driving capacity evaluation obtained from a result of determination of a rider's driving skill based on an individual-driving-skill criterion. For example, the individual-driving-skill evaluation is a result of evaluation based on the degree of smooth motion or a result of evaluation based on the degree of quick motion.

[Smooth Motion]

Smooth motion herein refers to motion of a leaning vehicle in a case where actual turning motion of a leaning vehicle corresponds to turning motion predicted based on a rider's intention while the leaning vehicle is traveling around a corner.

[Quick Motion]

Quick motion herein refers to motion of a leaning vehicle in a case where actual turning motion of a leaning vehicle corresponds to turning motion predicted based on a rider's intention in order to obtain a turning force of the leaning vehicle when the leaning vehicle is traveling around a corner.

ADVANTAGEOUS EFFECTS OF INVENTION

A leaning-vehicle-real-time-information-presentation-control apparatus according to one embodiment of the present teaching can enhance a recognition rate of an evaluation result of a driving skill presented during traveling of the leaning vehicle while suppressing an increase in a hardware processing capacity by suppressing an increase in a data processing load.

BRIEF DESCRIPTION OF DRAWINGS

[FIG. 1] FIG. 1 is a left side view of a vehicle according to an embodiment.
[FIG. 2] FIG. 2 is a functional block diagram illustrating a configuration of a leaning-vehicle-real-time-information-presentation-control apparatus according to the embodiment.
[FIG. 3] FIG. 3 is a functional block diagram illustrating a specific configuration of the leaning-vehicle-real-time-information-presentation-control apparatus according to the embodiment.
[FIG. 4] FIG. 4 is a functional block diagram illustrating a smooth-motion-degree determiner according to the embodiment and a peripheral configuration thereof.
[FIG. 5] FIG. 5 is a functional block diagram illustrating a quick-motion-degree determiner according to the embodiment and a peripheral configuration thereof.
[FIG. 6] FIG. 6 is a distribution chart in which the degree of smooth motion and the degree of quick motion of the vehicle by a rider using a typical evaluation criterion are plotted on a two-dimensional-coordinate system.
[FIG. 7] FIG. 7 is a distribution chart in which the degree of smooth motion and the degree of quick motion of the vehicle by a rider using an individual-driving-skill criterion are plotted on a two-dimensional-coordinate system.
[FIG. 8] FIG. 8 is a flowchart depicting an operation of individual-driving-skill-criterion calculation according to the embodiment.
[FIG. 9] FIG. 9 is a flowchart depicting evaluation operation of an individual driving skill according to the embodiment.
[FIG. 10] FIG. 10 illustrates an overall configuration of the leaning vehicle and a configuration of the leaning-vehicle-real-time-information-presentation-control apparatus.

DESCRIPTION OF EMBODIMENT

An embodiment of the present teaching will be described hereinafter with reference to the drawings. The dimensions of components in the drawings do not strictly represent actual dimensions of the components and dimensional proportions of the components.
In the following description, arrow F in the drawings represents a forward direction of a leaning vehicle. Arrow RR in the drawings represents a rearward direction of the leaning vehicle. Arrow U in the drawings represents an upward direction of the leaning vehicle. The front, the rear, the left, and the right respectively refer to the front, the rear, the left, and the right when seen from a rider of the vehicle. The top-bottom direction refers to a top-bottom direction when seen from the rider of the leaning vehicle.

<Overall Configuration>

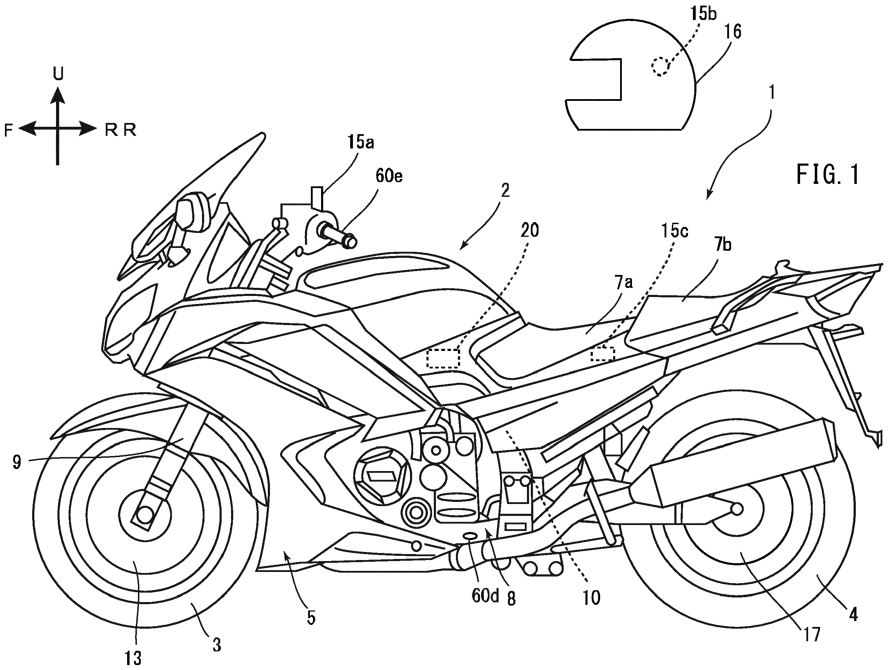

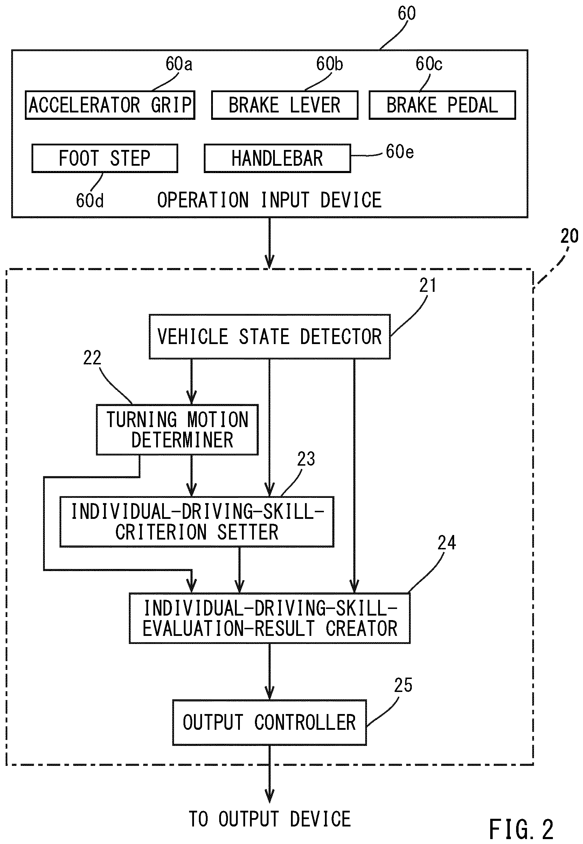

FIG. 1 is a left side view of a leaning vehicle 1 according to an embodiment of the present teaching. The leaning vehicle 1 is, for example, a motorcycle. The leaning vehicle 1 is a leaning vehicle configured to lean leftward when turning to the left and to lean rightward when turning to the right. The leaning vehicle 1 includes a vehicle body 2, a front wheel 3, a rear wheel 4, and a leaning-vehicle-real-time-information-presentation-control apparatus 20.
The vehicle body 2 includes a vehicle body cover 5, a handlebar 60e, a front seat 7a, a tandem seat 7b, a power unit 8 (driving source), and a vehicle body frame 10. The vehicle body frame 10 supports components such as the vehicle body cover 5, the handlebar 60e, the front seat 7a, the tandem seat 7b, and the power unit 8. In this embodiment, the vehicle body 2 is a structure including the vehicle body frame 10 and supporting components of the leaning vehicle 1.
The handlebar 60e is coupled to an upper end portion of an unillustrated steering shaft. The handlebar 60e is provided with an accelerator grip 60a (accelerator operator, see FIG. 2). The handlebar 60e is also provided with a brake lever 60b (front-wheel-brake operator, see FIG. 2).
A pair of extendable front forks 9 (front suspensions) is coupled to a lower end portion of the steering shaft. Accordingly, the front forks 9 swing in the left direction or in the right direction by rotation operation of the handlebar 60e. The front wheel 3 is rotatably attached to lower end portions of the front forks 9. The front forks 9 extend and contract to thereby absorb vibrations of the front wheel 3 in the top-bottom direction. A front wheel brake 13 (front-wheel-brake device) is attached to the lower end portions of the front forks 9. The front wheel brake 13 applies a braking force to the front wheel 3 by operating the brake lever 60b.

The vehicle body frame 10 is provided with a brake pedal 60c (rear-wheel-brake operator, see FIG. 2) and a foot step 60d (see FIG. 2) for receiving a load. A rear wheel brake 17 (rear-wheel-brake device) provided to the rear wheel 4 is caused to apply a braking force to the rear wheel 4 by operating the brake pedal 60c. Although not shown, the rear wheel 4 is elastically supported on the vehicle body frame 10 by a rear suspension.

The accelerator grip 60a, the brake lever 60b, the brake pedal 60c, the foot step 60d that receives a load, and the handlebar 60e constitute an operation input device 60 (see FIG. 2). The leaning vehicle 1 travels in response to an operation input to the operation input device 60 by a rider.

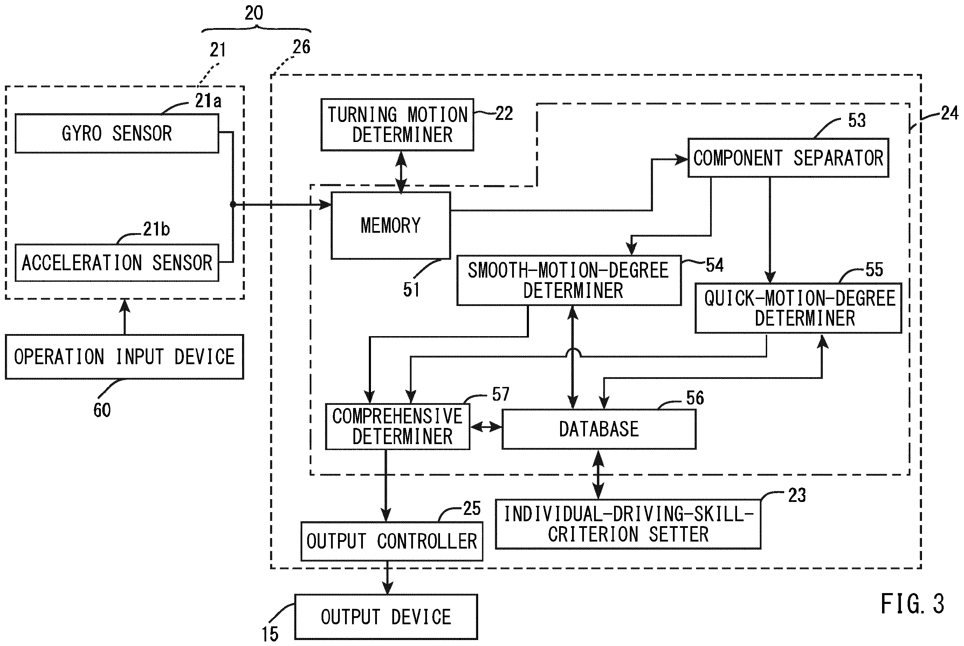

The handlebar 60e is provided with a monitor 15a constituting a vision device of an output device 15 (see FIG. 3). The front seat 7a is provided with a vibrator 15c constituting a tactile device of the output device 15. A helmet 16 to be worn by a rider is provided with a speaker 15b constituting an auditory device of the output device 15. The speaker 15b outputs voice to the rider.

In this embodiment, the leaning-vehicle-real-time-information-presentation-control apparatus 20 is provided in the vehicle body 2. The leaning-vehicle-real-time-information-presentation-control apparatus 20 detects a vehicle state of the leaning vehicle 1 that changes by operation of the operation input device 60 by a rider and, based on the vehicle state, presents a driving-skill-evaluation result to the rider during traveling of the leaning vehicle 1.

In this embodiment, the vehicle state includes at least one of a physical quantity concerning yaw motion, a physical quantity concerning roll motion, or a physical quantity concerning pitch motion, acquired during traveling of the leaning vehicle.

In turning of the leaning vehicle 1 having the configuration described above, a rider of the leaning vehicle 1 drives the leaning vehicle 1, for example, in the manner described below to turn around a corner. The rider of the leaning vehicle 1 first returns the accelerator grip 60a subjected to rotation operation to an original position and actuates the front wheel brake 13 and the rear wheel brake 17. At this time, the rider adjusts the actuation amounts of the front wheel brake 13 and the rear wheel brake 17 and the timing of actuating at least one of the front wheel brake 13 or the rear wheel brake 17 by returning the accelerator grip 60a to the original position as appropriate such that the front wheel 3 and the rear wheel 4 are not locked. After the leaning vehicle 1 has been sufficiently decelerated, the rider releases the front wheel brake 13 and the rear wheel brake 17, performs steering operation with the handlebar 60e in the order of reverse steering and forward steering, and performs load transfer to thereby cause the vehicle body 2 to lean toward the turning center. Thereafter, in order to maintain the turning state of the leaning vehicle 1, the rider turns the leaning vehicle 1 while controlling a steering rudder angle and a leaning angle and a vehicle speed of the vehicle body 2 by, for example, steering operation, load transfer, accelerator operation, and operation of the rear wheel brake 17. After turning of the leaning vehicle 1, the rider gradually raises the vehicle body 2 by, for example, steering operation, load transfer, and accelerator operation. Such operation of the leaning vehicle 1 is an example of operation in turning. Thus, the leaning vehicle 1 may be caused to turn by other operation techniques.

In the manner described above, the rider operates driving of the front wheel brake 13, driving of the rear wheel brake 17, driving of the power unit 8, and a posture of the vehicle body 2 by using the operation input device 60 to thereby cause the leaning vehicle 1 to turn.

<Configuration of Leaning-vehicle-real-time-information-presentation-control Apparatus 20>

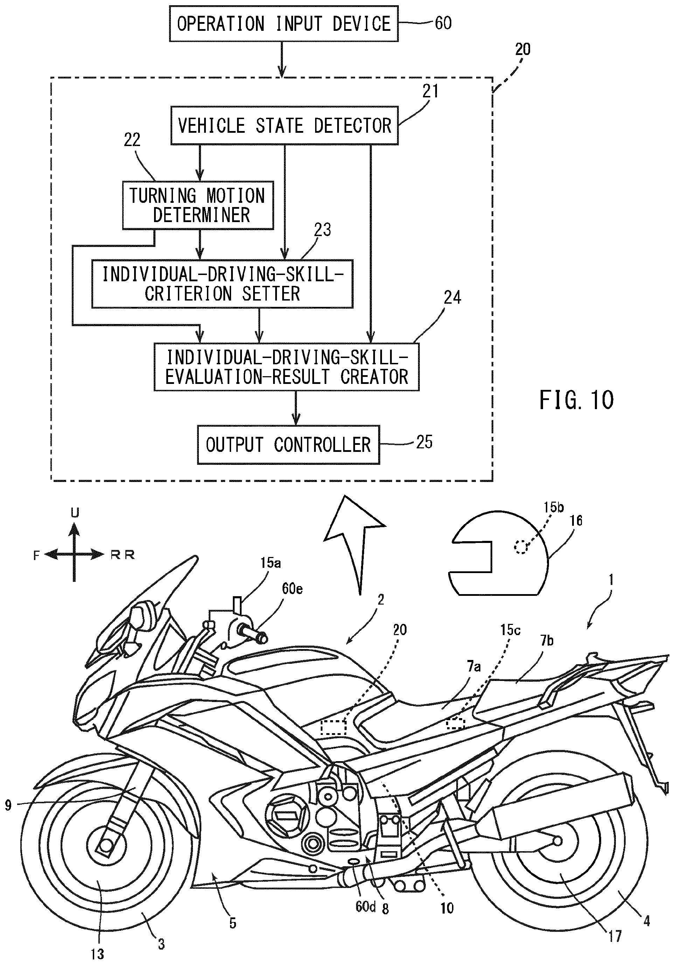

Next, an example of a configuration of the leaning-vehicle-real-time-information-presentation-control apparatus 20 will be described with reference to FIGS. 2 and 10. FIG. 2 is a block diagram illustrating a configuration of the leaning-vehicle-real-time-information-presentation-control apparatus 20. FIG. 10 illustrates an overall configuration of the leaning vehicle 1 and a configuration of the leaning-vehicle-real-time-information-presentation-control apparatus 20.

The leaning-vehicle-real-time-information-presentation-control apparatus 20 includes a vehicle state detector 21, a turning motion determiner 22, an individual-driving-skill-criterion setter 23, an individual-driving-skill-evaluation-result creator 24, and an output controller 25.

The leaning-vehicle-real-time-information-presentation-control apparatus 20 is constituted by, for example, an information processing device incorporating the vehicle state detector 21. The information processing device is disposed in the vehicle body 2. The leaning-vehicle-real-time-information-presentation-control apparatus 20 is preferably fixed to the vehicle body 2. Accordingly, it is possible to reduce inclusion of noise caused by vibrations in the leaning vehicle 1, in data (detection result) detected by the vehicle state detector 21.

The information processing device may not incorporate the vehicle state detector 21. The information processing device may be constituted by, for example, a portable terminal device such as a smartphone including a gyro sensor and an acceleration sensor. In this case, it is sufficient to install a predetermined application in the portable terminal device to thereby constitute the information processing device including the vehicle state detector 21, the turning motion determiner 22, the individual-driving-skill-criterion setter 23, the individual-driving-skill-evaluation-result creator 24, and the output controller 25. In the case where the information processing device is constituted by the portable terminal device, the portable terminal device is preferably configured to be more firmly fixed to the vehicle body 2. The firm fixing of the portable terminal device to the vehicle body 2 can reduce inclusion of noise caused by vibrations in the leaning vehicle 1, in data (detection result) detected by the vehicle state detector 21.

Alternatively, the information processing device may be a combination of a portable terminal device and a server. In this case, the portable terminal device may acquire data of physical quantity concerning a vehicle state of the leaning vehicle, and perform computation on the data to transmit a result of the computation (e.g., a driving-skill-evaluation result, or an individual-driving-skill criterion) to the server, or may transmit the data to the server so that the server performs computation on the data. The computation result may be output from the portable terminal device.

The vehicle state detector 21 detects a vehicle state of the leaning vehicle 1 while the leaning vehicle 1 is traveling. That is, the vehicle state detector 21 detects at least one of a physical quantity concerning yaw motion, a physical quantity concerning roll motion, or a physical quantity concerning pitch motion, of the leaning vehicle 1 while the leaning vehicle is traveling.

The vehicle state detector 21 includes a gyro sensor 21a and an acceleration sensor 21b (see FIG. 3). The leaning-vehicle-real-time-information-presentation-control apparatus 20 can calculate a vehicle speed and an acceleration/deceleration of the leaning vehicle 1 by using the acceleration sensor 21b.

The vehicle state detector 21 detects and acquires at least one of a physical quantity concerning yaw motion, a physical quantity concerning roll motion, and a physical quantity concerning pitch motion, of the leaning vehicle 1 during traveling of the leaning vehicle by using the gyro sensor 21a (see FIG. 3). The physical quantity data acquired by the vehicle state detector 21 are chronologically stored in a memory 51 (see FIG. 3).

The vehicle state detector 21 outputs the acquired data to the turning motion determiner 22, the individual-driving-skill-criterion setter 23, and the individual-driving-skill-evaluation-result creator 24.

The turning motion determiner 22 determines whether the leaning vehicle 1 performs turning motion that is a target of driving skill determination of a rider or not. In this embodiment, the turning motion determiner 22 obtains a yaw rate based on the physical quantity data concerning yaw motion output from the vehicle state detector 21, and determines that a case where a state in which the yaw rate is a given value or more continues for a given time or more is a turning state. The determination result in the turning motion determiner 22 is output to the individual-driving-skill-criterion setter 23 as determination data. A detailed configuration of the turning motion determiner 22 will be described later.

The turning motion determiner 22 may determine whether the leaning vehicle 1 performs turning motion as a target of rider's driving skill determination or not, based on a roll rate or data obtained from a global positioning system (GPS) other than the yaw rate.

The individual-driving-skill-criterion setter 23 creates an individual-driving-skill criterion indicating a driving skill of an individual based on the driving-skill-criterion-setting-individual-traveling data acquired during turning of the leaning vehicle 1. Determination data of the turning state from the turning motion determiner 22, and the physical quantity data concerning the vehicle state acquired from the vehicle state detector 21, are input to the individual-driving-skill-criterion setter 23.

The individual-driving-skill-criterion setter 23 reads, from the memory 51, physical quantity data of a period determined as a turning motion section by the turning motion determiner 22, and acquires the data as driving-skill-criterion-setting-individual-traveling data. The acquisition of the driving-skill-criterion-setting-individual-traveling data includes the case of acquiring physical quantity data concerning a vehicle state in a predetermined period in which the leaning vehicle travels and, from the acquired data, acquiring necessary data as driving-skill-criterion-setting-individual-traveling data and the case of acquiring only necessary data from traveling data of the leaning vehicle as driving-skill-criterion-setting-individual-traveling data.

In this embodiment, the leaning-vehicle-real-time-information-presentation-control apparatus 20 stores, in the memory 51, physical quantity data concerning a vehicle state acquired by the vehicle state detector 21 during traveling of the leaning vehicle 1 (see FIG. 3). The leaning-vehicle-real-time-information-presentation-control apparatus 20 reads the physical quantity data concerning a vehicle state stored in the memory 51, and uses the physical quantity data as driving-skill-criterion-setting-individual-traveling data.

The driving-skill-criterion-setting-individual-traveling data may be physical quantity data concerning a vehicle state acquired during previous traveling of the leaning vehicle 1, other than the physical quantity data concerning a vehicle state during traveling of the leaning vehicle 1. In this case, the memory 51 needs to store physical quantity data concerning a vehicle state acquired during previous traveling of the leaning vehicle 1.

The individual-driving-skill-criterion setter 23 acquires an evaluation result of a driving skill of a rider based on the acquired driving-skill-criterion-setting-individual-traveling data and a predetermined evaluation criterion. The evaluation result of the driving skill of the rider is used for setting an individual-driving-skill criterion, which will be described later. The individual-driving-skill-criterion setter 23 then accumulates the evaluation results of the driving skill in a database 56 (see FIG. 3) in a given period.

The individual-driving-skill-criterion setter 23 creates an individual-driving-skill criterion based on the accumulated evaluation results of the driving skill. For example, the individual-driving-skill criterion is created based on a mean value and a standard deviation that are a statistic of the evaluation results of the driving skill accumulated in the database 56. The mean value is selected from an arithmetic mean, a geometric mean, a harmonic mean, and a trimmed mean. The statistic may be selected from a median, a mode, a maximum value, a minimum value, a percentile (e.g., quartile point), variances (sample variance and unbiased variance), and a coefficient of variation, except for the mean value.

As described above, the individual-driving-skill-criterion setter 23 sets an individual-driving-skill criterion based on a plurality of evaluation results of a rider himself/herself. Since the individual-driving-skill criterion is set based on traveling data of the rider himself/herself, the data volume for acquiring the individual-driving-skill criterion can be reduced. Accordingly, an increase in a data processing load of the leaning-vehicle-real-time-information-presentation-control apparatus 20 can be suppressed, and an increase in a resource necessary for hardware can be suppressed.

The created individual-driving-skill criterion is input to the individual-driving-skill-evaluation-result creator 24. The individual-driving-skill-evaluation-result creator 24 evaluates the evaluation-individual-traveling data acquired by the vehicle state detector 21 based on the individual-driving-skill criterion during traveling of the leaning vehicle 1 to thereby create an individual-driving-skill-evaluation result.

The leaning-vehicle-real-time-information-presentation-control apparatus 20 stores the physical quantity data concerning the vehicle state acquired by the vehicle state detector 21 during traveling of the leaning vehicle 1 in the memory 51 (see FIG. 3) and reads the physical quantity data concerning the vehicle state stored in the memory 51. The individual-driving-skill-evaluation-result creator 24 acquires physical quantity data concerning the vehicle state read out from the memory 51, as evaluation-individual-traveling data. The acquisition of the evaluation-individual-traveling data includes the case of acquiring physical quantity data concerning a vehicle state in a predetermined period in which the leaning vehicle travels, and from the acquired data, extracting and acquiring necessary data as evaluation-individual-traveling data and the case of acquiring only necessary data of physical quantity data concerning the vehicle state as evaluation-individual-traveling data.

Determination data of a turning state output from the turning motion determiner 22, the evaluation-individual-traveling data, and the individual-driving-skill criterion created by the individual-driving-skill-criterion setter 23, are input to the individual-driving-skill-evaluation-result creator 24.

The physical quantity data concerning the vehicle state acquired by the vehicle state detector 21 after acquisition of the driving-skill-criterion-setting-individual-traveling data and during turning of the vehicle body 2 are chronologically stored in the memory 51 (see FIG. 3). Then, the individual-driving-skill-evaluation-result creator 24 reads, from the memory 51, physical quantity data in a period determined to be a turning motion section by the turning motion determiner 22, and acquires the physical quantity data as evaluation-individual-traveling data.

The individual-driving-skill-evaluation-result creator 24 evaluates the evaluation-individual-traveling data based on the individual-driving-skill criterion created by the individual-driving-skill-criterion setter 23 to thereby create an individual-driving-skill-evaluation result evaluated during traveling of the leaning vehicle 1. The individual-driving-skill-evaluation result is standardized using an individual-driving-skill criterion, and is, for example, an evaluation result plotted on a z-score coordinate.

The created individual-driving-skill-evaluation result is output to the output controller 25. The output controller 25 outputs the acquired individual-driving-skill-evaluation result to the output device 15 (see FIG. 3) in real time while the leaning vehicle 1 is traveling. The output device 15 is constituted by at least one of the speaker 15b as an auditory device, the vibrator 15c as a tactile device, or the monitor 15a as a vision device. The output controller 25 outputs the acquired individual-driving-skill-evaluation result in real time to at least one of the speaker 15b, the vibrator 15c, or the monitor 15a,

As the auditory device of the output device 15, the speaker 15b attached to the helmet 16 is used, for example. Alternatively, as the auditory device of the output device 15, a speaker attached to the vehicle body 2 may be used. The individual-driving-skill-evaluation result is output by voice by the auditory device so that a rider is notified of the individual-driving-skill-evaluation result. The auditory device may be a device except for the speaker as long as the auditory device can output voice to the rider.

As the tactile device of the output device 15, the vibrator 15c attached to the front seat 7a is used, for example. The vibrator 15c vibrates in response to the individual-driving-skill-evaluation result so that the rider is notified of the individual-driving-skill-evaluation result. The tactile device may be a device except for the vibrator as long as the device can produce an output to the body of the rider, and may be disposed at a location except for the front seat.

As the vision device of the output device 15, the monitor 15a is used, for example. The monitor 15a is attached to the handlebar 60e. As described above, in the case where the leaning-vehicle-real-time-information-presentation-control apparatus 20 is configured by installing an application in a smartphone, the display of the smartphone can be used. The vision device may be a device except for the monitor as long as the device can visually recognized by the rider, and may be disposed at a location except for the handlebar. The vision device displays the individual-driving-skill-evaluation result so that the rider can be notified of the individual-driving-skill-evaluation result.

In the manner described above, the output controller 25 causes at least one of the speaker 15b, the vibrator 15c, or the monitor 15a of the output device 15 to output the individual-driving-skill-evaluation result acquired during traveling, while the leaning vehicle 1 is traveling. Accordingly, the leaning-vehicle-real-time-information-presentation-control apparatus 20 can enhance a recognition rate of an evaluation result of a driving skill presented during traveling of the leaning vehicle 1.

A specific example of the leaning-vehicle-real-time-information-presentation-control apparatus 20 according to this embodiment will now be described with reference to FIG. 3.

The leaning-vehicle-real-time-information-presentation-control apparatus 20 includes the vehicle state detector 21 and a characteristic determiner 26. The physical quantity data concerning the state of the leaning vehicle 1 acquired by the vehicle state detector 21 is input to the characteristic determiner 26.

The vehicle state detector 21 includes the gyro sensor 21a and the acceleration sensor 21b.

The gyro sensor 21a detects a physical quantity of each of a yaw rate, a yaw angle, a roll rate, a roll angle, a pitch rate, and a pitch angle of the leaning vehicle 1. The physical quantities concerning these angular velocities and angles detected by the gyro sensor 21a are input to the characteristic determiner 26.

The acceleration sensor 21b detects an acceleration of the leaning vehicle 1. The detected acceleration of the leaning vehicle is input to the characteristic determiner 26. The characteristic determiner 26 calculates a vehicle speed using the input acceleration.

In turning around a corner, when the rider steers the handlebar 60e of the leaning vehicle 1, the yaw angle, the yaw rate, and the steering angle of the leaning vehicle 1 change. When the rider leans the vehicle body 2 of the leaning vehicle 1 toward the center of the corner, the roll angle and the roll rate of the leaning vehicle 1 change. Before the leaning vehicle 1 enters a corner or while the leaning vehicle 1 is traveling on the corner, when the rider operates the brake lever to decelerate the leaning vehicle 1, the front forks 9 contract. The contraction of the front forks 9 causes the pitch angle and the pitch rate of the leaning vehicle 1 to change.

A configuration of the characteristic determiner 26 of the leaning-vehicle-real-time-information-presentation-control apparatus 20 will now be described.

As illustrated in FIG. 3, the characteristic determiner 26 includes the turning motion determiner 22, the memory 51, a component separator 53, a smooth-motion-degree determiner 54, a quick-motion-degree determiner 55, a comprehensive determiner 57, the database 56, the individual-driving-skill-criterion setter 23, and the output controller 25.

The physical quantity data concerning the vehicle state acquired by the vehicle state detector 21 are chronologically stored in the memory 51. Operation of the turning motion determiner 22 is similar to operation of the turning motion determiner disclosed in Japanese Patent No. 5619957. Thus, description of operation of the turning motion determiner 22 will be omitted.

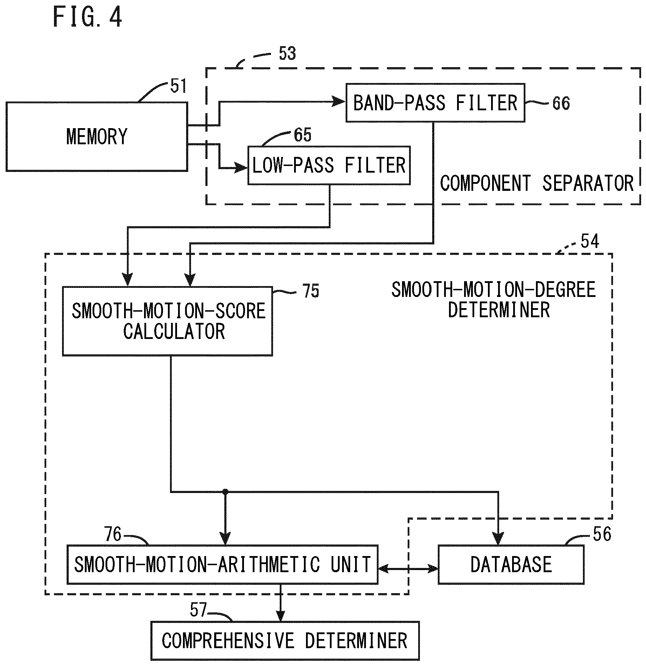

The component separator 53 separates components of the physical quantity data concerning the vehicle state. The component separator 53 includes a low-pass filter 65 and a band-pass filter 66 (see FIG. 4). Detection values input to the component separator 53 are subjected to filtering by the low-pass filter 65 and the band-pass filter 66. The function of the component separator 53 is similar to the function of the component separator disclosed in Japanese Patent No. 5619957. Thus, the detailed description of the component separator 53 will be omitted.

The physical quantity data concerning the vehicle state subjected to the component separation by the component separator 53 is input to each of the smooth-motion-degree determiner 54 and the quick-motion-degree determiner 55. Each of the smooth-motion-degree determiner 54 and the quick-motion-degree determiner 55 determines a characteristic based on the input physical quantity data concerning the vehicle state. The characteristic determination will be described later.

The smooth-motion-degree determiner 54 will now be described with reference to FIG. 4.

FIG. 4 is a functional block diagram illustrating the smooth-motion-degree determiner 54 and a peripheral configuration thereof. When the turning motion determiner 22 determines a turning motion section, physical quantity data concerning the vehicle state stored in the memory 51 in the turning motion section is sent to the component separator 53.

The smooth-motion-degree determiner 54 determines the degree of smooth motion of the vehicle. The smooth-motion-degree determiner 54 includes a smooth-motion-score calculator 75.

Physical quantity data concerning a vehicle state in a turning motion section Y (see Japanese Patent No. 5619957) of the leaning vehicle 1 subjected to filtering by the low-pass filter 65 and the band-pass filter 66, is input to the smooth-motion-score calculator 75. In this embodiment, a case where a yaw rate, a roll rate, and a pitch rate are input to the smooth-motion-score calculator 75 will be described as an example. Data obtained by filtering the physical quantity data concerning the vehicle state including the yaw rate, the roll rate, and the pitch rate by the low-pass filter 65 and the band-pass filter 66 is input to the smooth-motion-score calculator 75.

Operation of the smooth-motion-score calculator 75 is similar to the function of the vehicle stability score calculator disclosed in Japanese Patent No. 5619957. Thus, the smooth-motion-score calculator 75 will not be described in detail.

The smooth-motion-score calculator 75 outputs a calculated vehicle-smooth-motion score $S_V$ (vehicle stability score $S_V$ in Japanese Patent No. 5619957) to a smooth-motion-arithmetic unit 76 and the database 56.

The smooth-motion-arithmetic unit 76 calculates an evaluation result concerning the degree of smooth motion of the rider based on the vehicle-smooth-motion score $S_V$ and an evaluation criterion of smooth motion stored in the database 56.

In this manner, the smooth-motion-degree determiner 54 can obtain an evaluation result concerning the degree of smooth motion of the rider with respect to the evaluation criterion. The evaluation result concerning the degree of smooth motion is stored in the database 56. The evaluation result concerning the degree of smooth motion is then input to the comprehensive determiner 57.

In this embodiment, the comprehensive determiner 57 described later comprehensively evaluates and determines a driving skill of the rider based on two evaluation results of the evaluation result concerning the degree of smooth motion and an evaluation result concerning the degree of quick motion described later. The comprehensive evaluation result obtained by the comprehensive determiner 57 is stored in the database 56.

The smooth-motion-degree determiner 54 performs the processing described above on physical quantity data concerning a vehicle state obtained by turning around a plurality of corners in a given period. Accordingly, at least a plurality of evaluation results concerning the degree of smooth motion and a plurality of evaluation results concerning the degree of quick motion described later, of the rider are accumulated in the database 56.

< Determination of Quick Motion Degree>

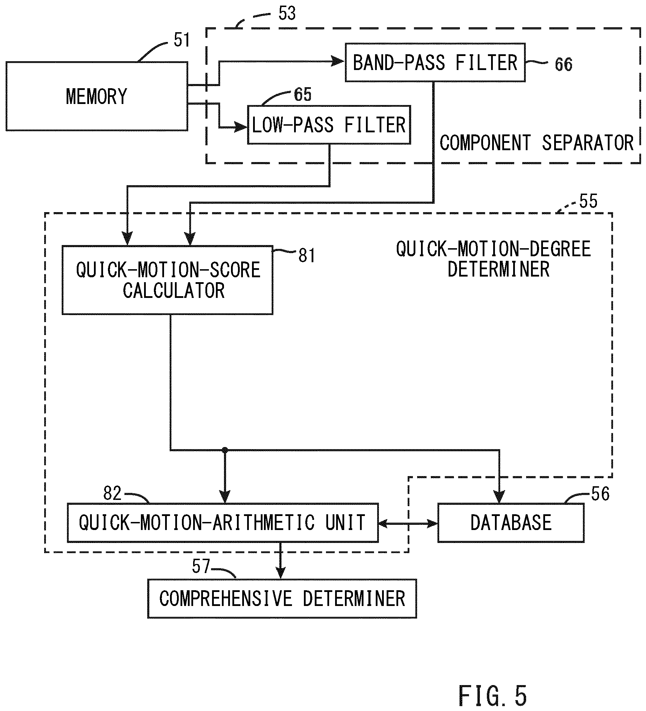

The quick-motion-degree determiner 55 will now be described with reference to FIG. 5. FIG. 5 is a functional block diagram illustrating the quick-motion-degree determiner 55 and a peripheral configuration thereof. The quick-motion-degree determiner 55 for determining the degree of quick motion of the vehicle includes a quick-motion-score calculator 81.

Operation of the quick-motion-score calculator 81 is similar to the function of the turning-performance-score calculator disclosed in Japanese Patent No. 5619957. Thus, the quick-motion-score calculator 81 will not be described in detail.

A quick motion score $T_v$ (turning performance score $T_v$ in Japanese Patent No. 5619957) calculated in the quick-motion-score calculator 81 is output to a quick-motion-arithmetic unit 82 and the database 56. The quick-motion-arithmetic unit 82 calculates an evaluation result concerning the degree of quick motion of the rider with respect to an evaluation criterion, based on the quick motion score $T_v$ and the evaluation criterion stored in the database 56.

Accordingly, the quick-motion-degree determiner 55 can obtain an evaluation result concerning quick motion of the rider with respect to the evaluation criterion. This evaluation result of quick motion is stored in the database 56.

The comprehensive determiner 57 performs characteristic determination using the smooth motion score $S_v$ and the quick motion score $T_v$. Specifically, the comprehensive determiner 57 calculates a comprehensive characteristic score G of the rider in the turning motion section Y by using the smooth motion score $S_v$ and the quick motion score $T_v$, from Equation (1) below. In Equation (1), $K_7$ and $K_8$ are weighting factors. The comprehensive characteristic score G may be calculated by using, for example, a product, the sum of products, or a conditional probability, other than the weighting linear sum. The calculated comprehensive characteristic score G is stored in the database 56.

[Equation 1]

$$G = K_7 \cdot S_v + K_8 \cdot T_v \quad \cdots (1)$$

Since the comprehensive characteristic score G is a continuous value, a comprehensive characteristic of the rider can be determined in a stepless manner by using the comprehensive characteristic score G. The comprehensive characteristic score G is a value with which smooth motion and quick motion of the vehicle by the rider can be comprehensively determined. The comprehensive determiner 57 outputs the comprehensive characteristic score G.

<Setting of Individual-driving-skill Criterion>

In the case of calculating the individual-driving-skill criterion, the leaning-vehicle-real-time-information-presentation-control apparatus 20 acquires driving-skill-criterion-setting-individual-traveling data obtained while the leaning vehicle 1 turns. Specifically, physical quantity data concerning the vehicle state acquired by the vehicle state detector 21 are chronologically stored in the memory 51.

The leaning-vehicle-real-time-information-presentation-control apparatus 20 reads physical quantity data in a period determined to be a turning motion section by the turning motion determiner 22 from the memory 51, and acquires the data as driving-skill-criterion-setting-individual-traveling data.

Components of the acquired driving-skill-criterion-setting-individual-traveling data are separated by the component separator 53, and physical quantity data concerning the vehicle state subjected to the component separation is input to the smooth-motion-degree determiner 54 and the quick-motion-degree determiner 55. The smooth-motion-degree determiner 54 and the quick-motion-degree determiner 55 determine a characteristic of the input physical quantity data concerning the vehicle state based on the evaluation criterion previously stored in the database 56. The smooth-motion-degree determiner 54 calculates an evaluation result concerning the degree of smooth motion, and the quick-motion-degree determiner 55 calculates an evaluation result concerning the degree of quick motion. The evaluation result concerning the degree of smooth motion and the evaluation result concerning the degree of quick motion are stored in the database 56.

The individual-driving-skill-criterion setter 23 performs the processing described above based on driving-skill-criterion-setting-individual-traveling data obtained by turning around a plurality of corners in a given period. The individual-driving-skill-criterion setter 23 calculates a plurality of evaluation results concerning the degree of smooth motion and a plurality of evaluation results concerning the degree of quick motion, and stores the calculated evaluation results in the database 56. Accordingly, the database 56 stores at least a plurality of evaluation results concerning the degree of smooth motion of the rider and a plurality of evaluation results concerning the degree of quick motion described later, of the rider.

The individual-driving-skill-criterion setter 23 reads the plurality of evaluation results concerning the degree of smooth motion and the plurality of evaluation results concerning the degree of quick motion stored in the database 56. The individual-driving-skill-criterion setter 23 creates an individual-driving-skill criterion based on the plurality of evaluation results of the rider that have been read out. For example, the individual-driving-skill criterion is created based on a mean value and a standard deviation as a statistic of the stored evaluation results. The created individual-driving-skill criterion is stored in the database 56.

The individual-driving-skill-evaluation result is obtained by evaluation of evaluation-individual-traveling data by the individual-driving-skill-evaluation-result creator 24 using the created individual-driving-skill criterion.

<Creation of Individual-driving-skill-evaluation Result>

A process of creating an individual-driving-skill-evaluation result of a rider based on the created individual-driving-skill criterion will now be described.

The leaning-vehicle-real-time-information-presentation-control apparatus 20 acquires evaluation-individual-traveling data acquired while the leaning vehicle 1 is turning after acquisition of the driving-skill-criterion-setting-individual-traveling data, by operation of the operation input device 60 by the rider. The leaning-vehicle-real-time-information-presentation-control apparatus 20 obtains the individual-driving-skill-evaluation result by evaluating the acquired evaluation-individual-traveling data using the individual-driving-skill criterion during traveling of the leaning vehicle 1.

Until a vehicle-smooth-motion score $S_v$ and a vehicle-quick-motion score $T_v$ are acquired using the evaluation-individual-traveling data, the leaning-vehicle-real-time-information-presentation-control apparatus 20 performs the same process as the process before the vehicle-smooth-motion score $S_v$ and the vehicle-quick-motion score $T_v$ described above are acquired. Thus, description of the leaning-vehicle-real-time-information-presentation-control apparatus 20 will be omitted here.

Next, operation of the smooth-motion-arithmetic unit 76 will be described. The smooth-motion-score calculator 75 outputs the calculated vehicle-smooth-motion score $S_v$ to the smooth-motion-arithmetic unit 76 and the database 56.

The smooth-motion-arithmetic unit 76 evaluates the vehicle-smooth-motion score $S_v$ based on the individual-driving-skill criterion calculated by the individual-driving-skill-criterion setter 23, and calculates an individual-driving-skill-evaluation result. The database 56 stores an individual-driving-skill criterion of a rider calculated by the individual-driving-skill-criterion setter 23. In this embodiment, the database 56 stores a mean value (reference value) and a standard deviation (reference value) of the vehicle-smooth-motion score $S_v$ in setting the individual-driving-skill criterion.

The smooth-motion-arithmetic unit 76 standardizes the smooth motion score $S_v$ using the individual-driving-skill criterion (mean value) and the standard deviation (reference value) of the rider read out from the database 56. In this manner, an evaluation result of vehicle smooth motion with respect to the individual-driving-skill criterion can be obtained. This evaluation result of vehicle smooth motion is stored in the database 56. The evaluation result of vehicle smooth motion is further input to the comprehensive determiner 57.

The smooth-motion-arithmetic unit 76 standardizes the smooth motion score $S_v$ using the mean value and the standard deviation stored in the database 56 as the individual-driving-skill criterion, and outputs the evaluation result as a z-score (z) coordinate. The z-score is obtained by the following Equation (2):
[Equation 2]

$$Z = \frac{x - x_{AV}}{v} \quad \cdots (2)$$

where x is a characteristic score (smooth motion score $S_v$ and quick motion score $T_v$), $x_{AV}$ is a mean value (reference value), and v is a standard deviation (reference value).

By using the z-score (z), an individual-driving-skill-evaluation result based on the individual-driving-skill criterion can be obtained.

Then, operation of the quick-motion-degree determiner 55 will be described. The quick-motion-score calculator 81 outputs the calculated quick motion score $T_v$ to the quick-motion-arithmetic unit 82 and the database 56.

The quick-motion-arithmetic unit 82 calculates an individual-driving-skill-evaluation result using the individual-driving-skill criterion calculated by the individual-driving-skill-criterion setter 23. The database 56 stores the individual-driving-skill criterion of the rider calculated by the individual-driving-skill-criterion setter 23. In this embodiment, the database 56 stores a mean value (reference value) and a standard deviation (reference value) of the vehicle-quick-motion score $T_v$ in setting an individ-

ual-driving-skill criterion.

The quick-motion-arithmetic unit 82 reads the individual-driving-skill criterion of the rider from the database 56 and, based on Equation (2) above, standardizes an evaluation result using the mean value and the standard deviation stored in the database as the individual-driving-skill criterion, and outputs the evaluation result to the z-score (z) coordinate. In this manner, an evaluation result concerning quick motion of the rider with respect to the individual-driving-skill criterion can be obtained. The evaluation result concerning quick motion is stored in the database 56. The evaluation result concerning vehicle quick motion is further input to the comprehensive determiner 57.

When the comprehensive determiner 57 calculate the comprehensive characteristic score G based on Equation (1) above, the comprehensive characteristic score G is input from the comprehensive determiner 57 to the output controller 25.

The output controller 25 outputs output data based on the comprehensive characteristic score G to at least one of the auditory device, the tactile device, or the vision device of the output device 15 during traveling of the leaning vehicle. For example, in a case where a score of the comprehensive characteristic score G itself is output from the speaker 15b of the output device 15 by voice, the output controller 25 outputs data for sound output to the speaker 15b of the output device 15. In a case where a score of the comprehensive characteristic score G itself is output by the monitor 15a of the output device 15, the output controller 25 outputs data for display to the monitor 15a of the output device 15.

The comprehensive determiner 57 may determine a comprehensive characteristic in a plurality of stages based on a threshold in the comprehensive characteristic score G, and the output controller 25 may output a result of this determination to at least one of the speaker 15b, the vibrator 15c, or the monitor 15a of the output device 15. For example, the vibrator 15c of the output device 15 may be disposed at a location to be touched by the rider so that the comprehensive determiner 57 determines a comprehensive characteristic in a plurality of stages and the vibrator 15c applies vibrations to the rider as a result of the determination. For example, the vibrator 15c may be disposed in the front seat 7a. In this case, the determination result may be presented to the rider by vibrations of the vibrator 15c. In the manner described above, the output device 15 may output a determination result to at least one sense organ of auditory or tactile as well as vision of the rider.

As described above, the individual-driving-skill-evaluation result is acquired by evaluating evaluation-individual-traveling data based on an individual-driving-skill criterion corresponding to the rider. Thus, an individual-driving-skill-evaluation result in accordance with a minute change of an operation input by the rider is obtained while being reflected in the comprehensive characteristic score G.

It is sufficient that the output device 15 is configured to present an individual-driving-skill-evaluation result to a rider by using information except for numerical values while the leaning vehicle 1 is traveling. The output device 15 presents the individual-driving-skill-evaluation result to the rider by information except for numerical values so that a recognition rate of the individual-driving-skill-evaluation result by the rider is enhanced.

It is sufficient that the individual-driving-skill-evaluation result acquired during traveling of the leaning vehicle 1 is output to at least one of the auditory device, the tactile device, or the vision device of the output device 15 after the individual-driving-skill-evaluation result has been acquired and before the leaning vehicle 1 enters a next turning state while the leaning vehicle 1 is traveling.

Accordingly, the output device 15 presents the individual-driving-skill-evaluation result before the leaning vehicle 1 enters the next turning state. As a result, a recognition rate of the individual-driving-skill-evaluation result by the rider can be enhanced.

It is sufficient that the individual-driving-skill-evaluation result acquired during traveling of the leaning vehicle 1 is output to at least one of the auditory device, the tactile device, or the vision device of the output device 15 before the leaning vehicle 1 enters from a turning state to a next turning state while the leaning vehicle 1 is traveling.

Accordingly, the output device 15 presents the individual-driving-skill-evaluation result before the leaning vehicle 1 enters the next turning state. As a result, a recognition rate of the individual-driving-skill-evaluation result by the rider is enhanced.

The comprehensive determiner 57 obtains the comprehensive characteristic score G as a determination result. However, with the comprehensive characteristic score G, it is difficult for the rider to determine which one of vehicle smooth motion or vehicle quick motion is suggested to be improved.

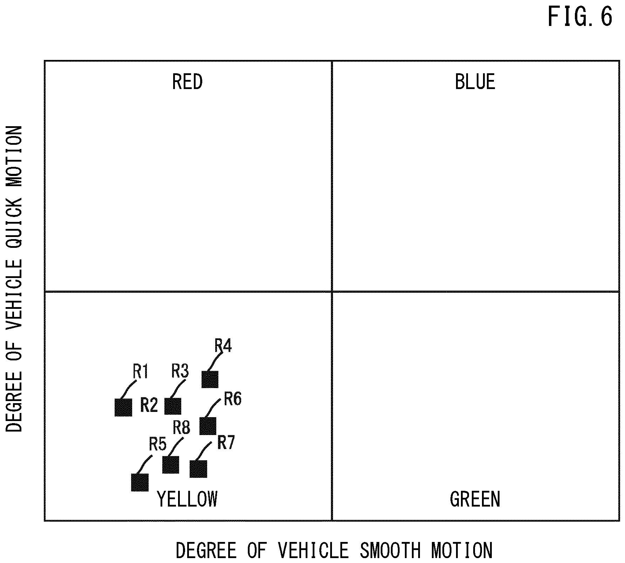

On the other hand, when the degree of vehicle smooth motion and the degree of vehicle quick motion of the rider is presented as an individual-driving-skill-evaluation result on a two-dimensional-coordinate system, a characteristic of the rider during turning becomes clear, and points to be improved or the like are clarified. An example of display on the two-dimensional-coordinate system will be described with reference to FIG. 6.

FIG. 6 is a distribution chart in which the degree of vehicle smooth motion and the degree of vehicle quick motion of the rider are plotted on a two-dimensional-coordinate system. The degree of vehicle smooth motion and the degree of vehicle quick motion of the rider represent a driving skill of the rider as relative positions on the two-dimensional-coordinate system. By expressing the degree of vehicle smooth motion and the degree of vehicle quick motion of the rider as the relative positions, points to be improved in driving by the rider and points for instruction are clarified.

In FIG. 6, the abscissa represents the degree of vehicle smooth motion, and the ordinate represents the degree of vehicle quick motion. In FIG. 6, scales of the degree of vehicle smooth motion and the degree of vehicle quick motion are scales according to a typical evaluation criterion not reflecting individual driving of the rider.

In the case where the degree of vehicle smooth motion and the degree of vehicle quick motion are plotted on the two-dimensional-coordinate system, the comprehensive determiner 57 outputs, to the output controller 25, data obtained by developing the degree of vehicle smooth motion and the degree of vehicle quick motion on the two-dimensional-coordinate system. For example, based on the developed data, the output controller 25 outputs data for causing the monitor 15a of the output device 15 to display as illustrated in FIG. 6. The output controller 25 classifies the degree of vehicle smooth motion and the degree of vehicle quick motion, and for each classified region, generates and outputs voice data to be output from the speaker 15b or data for causing the monitor 15a to display, for example, classes.

As illustrated in FIG. 6, the individual-driving-skill-evaluation result is classified into four classes by using the degree of vehicle smooth motion and the degree of vehicle quick motion. For example, the individual-driving-skill-evaluation result is classified into four regions by dividing at an intermediate value of each of the degree of vehicle smooth motion and the degree of vehicle quick motion.

As an example, in this embodiment, the individual-driving-skill-evaluation result is classified into four classes of "active control," "passive control," "rough driving" and "beginner driving." FIG. 6 shows eight evaluation results of a rider.

An individual-driving-skill evaluation of the rider included in the "rough driving" region has a relatively low vehicle-smooth-motion score and a relatively high vehicle-quick-motion score. For example, this region may be considered as an intermediate level region. In this embodiment, this region is, for example, a red region. In a case where the individual-driving-skill evaluation of the rider is included in this region, it is determined that the rider performs active driving action in order to obtain quick motion of the vehicle but cannot appropriately control the vehicle. Thus, it is shown that the rider whose individual-driving-skill evaluation is included in this region is proposed to learn a vehicle control method for enhancing vehicle smooth motion.

An individual-driving-skill evaluation of the rider included in the "beginner driving" region has a relatively low vehicle-smooth-motion score and a relatively low vehicle-quick-motion score. For example, this region may be a beginner region. In this embodiment, this region is, for example, a yellow region. In a case where the individual-driving-skill evaluation is included in this region, it is determined that the rider cannot appropriately control the vehicle and, thus, cannot obtain vehicle quick motion, either. Thus, it is shown that the rider whose individual-driving-skill evaluation is included in this region is proposed to learn a vehicle control method for enhancing vehicle smooth motion.

A driving evaluation of the rider included in the "passive control" region represents a driving level of an experienced rider. For example, this region may be an advanced region. In this embodiment, this region is, for example, a green region. It is shown that a rider whose individual-driving-skill evaluation is included in this region has room for improving a driving skill if the driver enhances vehicle quick motion.

A driving evaluation of the rider included in the "active control" region represents a driving region of an instructor. For example, this region may be a most advanced region. In this embodiment, this region is, for example, a blue region. A rider whose individual-driving-skill evaluation is included in this region only needs to maintain a current driving level.

In the four classes described above, the driving skill level increases in the order of the red region, the yellow region, the green region, and the blue region, but the color of each region may be another color.

In the case where the driving skill of a rider is classified into the classes described above in accordance with the degree of vehicle smooth motion and the degree of vehicle quick motion, the comprehensive determiner 57 stores evaluation results and coordinate values corresponding to the classes in the database 56.

As described above, in FIG. 6, the degree of vehicle smooth motion and the degree of vehicle quick motion are plotted on the two-dimensional area depending on a typical evaluation criterion not reflecting individual driving of the rider, and the data thereof is stored in the database 56. In FIG. 6, data from eight turning motion sections R1 through R8 are plotted.

As shown in FIG. 6, when the degree of vehicle smooth motion and the degree of vehicle quick motion are obtained based on a typical evaluation criterion not reflecting individual driving of a rider, an evaluation result of the driving skill is often an evaluation result in the same class. In particular, in a case where a rider having a low driving skill is subjected to evaluation based on the evaluation criterion described above, the same evaluation result is presented at any time. In other words, even in a case where the driving skill of a rider improves so that an operation input minutely changes, the evaluation result may not significantly change in some cases.

In view of this, in this embodiment, a driving skill criterion for use in evaluation is changed to an individual-driving-skill criterion based on traveling data of a rider himself/herself representing a most recent skill of the rider during traveling. The use of the individual-driving-skill criterion described above causes the individual-driving-skill-evaluation result to change even in the case where the driving skill of the rider improves and an operation input minutely changes. Accordingly, the rider can easily recognize improvement of the driving skill.

In this embodiment, the individual-driving-skill-criterion setter 23 calculates the individual-driving-skill criterion based on evaluation results of individual driving skills accumulated in the database 56. The calculated individual-driving-skill criterion is stored in the database 56.

The individual-driving-skill criterion stored in the database 56 is input to the smooth-motion-degree determiner 54 and the quick-motion-degree determiner 55. The leaning-vehicle-real-time-information-presentation-control apparatus 20 inputs the acquired evaluation-individual-traveling data to the smooth-motion-degree determiner 54 and the quick-motion-degree determiner 55. The smooth-motion-degree determiner 54 and the quick-motion-degree determiner 55 calculate the degree of vehicle smooth motion and the degree of vehicle quick motion based on the individual-driving-skill criterion.

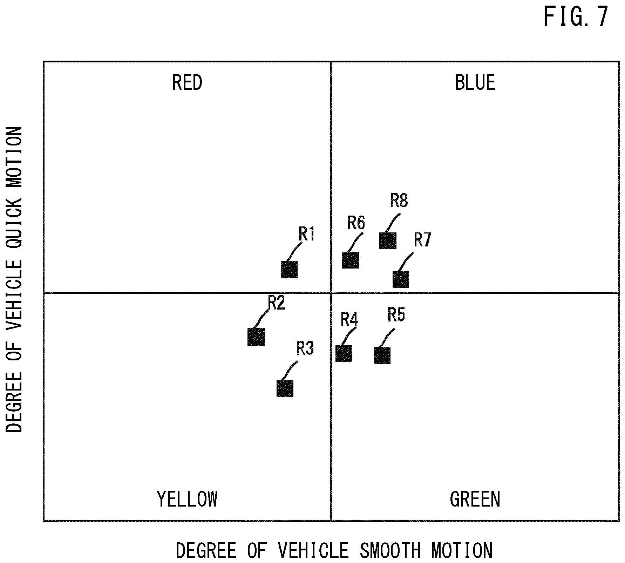

The comprehensive determiner 57 performs control such that an evaluation result of smooth motion and an evaluation result of quick motion of a rider are plotted on a coordinate space. Accordingly, the driving skill of the rider can be represented at a relative location on the coordinate space. In FIG. 7, scales of the degree of vehicle smooth motion and the degree of vehicle quick motion are scales according to the individual-driving-skill criterion.

For example, the output controller 25 outputs data for causing the monitor 15a of the output device 15 to display a screen as shown in FIG. 7, based on developed data. The output controller 25 performs classification in accordance with the degree of vehicle smooth motion and the degree of vehicle quick motion, and generates and outputs voice data to be output from the speaker 15b or data for causing the monitor to display, for example, a class, for each of the classified regions.

As shown in FIG. 7, a two-dimensional map of the degree of vehicle smooth motion and the degree of vehicle quick motion calculated based on the individual-driving-skill criterion is obtained. As shown in FIG. 7, as the individual-driving-skill-evaluation result, a detailed evaluation result corresponding to the current skill of a rider can be obtained.

It is sufficient that the individual-driving-skill criterion is set based on driving-skill-criterion-setting-individual-traveling data acquired during traveling or acquired during previous traveling before current traveling of the rider.

As described above, the individual-driving-skill criterion is set based on a skill during traveling of the leaning vehicle 1 or a most recent skill. Evaluation-individual-traveling data of the leaning vehicle is evaluated by using this individual-driving-skill criterion so that an evaluation result with respect to a minute change of an operation input is obtained, and the rider can easily recognize improvement of the driving skill.

As shown in FIG. 7, as long as scores of each of the eight turning motion sections R1 through R8 are displayed, even if the comprehensive characteristic scores G in respective turnings are substantially the same, it is possible to determine whether the rider turns in the same way every time or characteristics vary among the respective turnings by observing variations of plots on the coordinate space. The individual-driving-skill criterion is set based on the skill of the rider in traveling with the leaning vehicle 1 as described above. Accordingly, the individual-driving-skill-evaluation result is an evaluation result with respect to a minute change of an operation input by the rider. Thus, as compared to the case of using the typical evaluation criterion as shown in FIG. 6, the rider can obtain a detailed evaluation result corresponding to the current skill of the rider as shown in FIG. 7 and can easily recognize improvement of the driving skill.

<Control Operation of Individual-driving-skill-criterion Calculation>

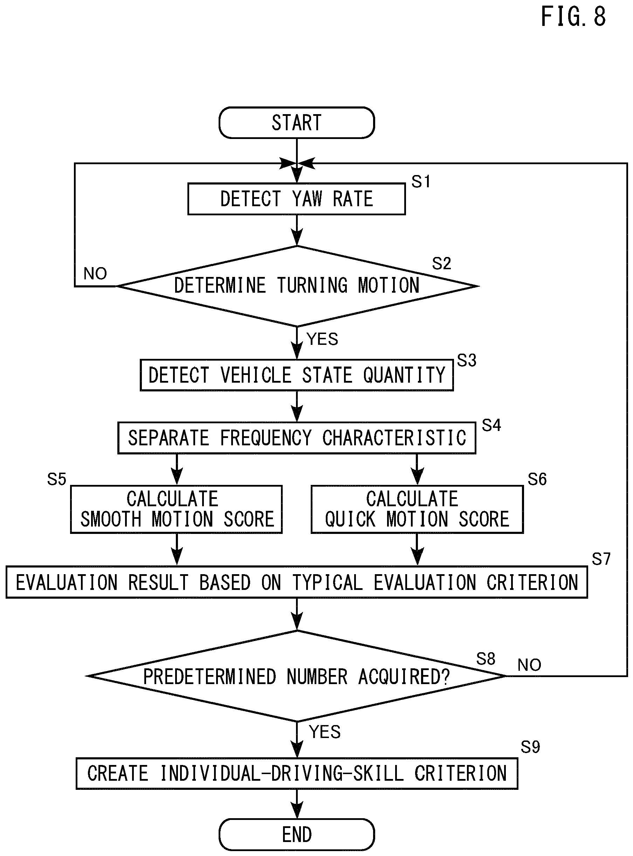

Next, control operation of individual-driving-skill-criterion calculation of the leaning-vehicle-real-time-information-presentation-control apparatus 20 will be described with reference to FIG. 8. FIG. 8 is a flowchart of individual-driving-skill-criterion calculation.

When a rider drives the leaning vehicle 1, the turning motion determiner 22 thereby acquires a yaw rate of the leaning vehicle 1 detected by the gyro sensor 21a (step S1). Next, the turning motion determiner 22 determines whether the leaning vehicle 1 conducted turning motion or not (step S2). If it is not determined that the leaning vehicle 1 conducted turning motion (No in step S2), a detection value of the yaw rate continues to be taken. If it is determined that the leaning vehicle 1 conducted turning motion (Yes in step S2), the vehicle state quantity is taken from the memory 51 to the component separator 53 (step S3).

Thereafter, the vehicle state quantity is subjected to filtering so that a frequency characteristic of the vehicle state quantity is separated (step S4). That is, a frequency characteristic of the vehicle state quantity input to the component separator 53 is separated into a low-frequency-band component and a high-frequency-band component by the low-pass filter 65 and the band-pass filter 66.

Based on the vehicle state quantity subjected to filtering, the smooth-motion-score calculator 75 calculates a vehicle-smooth-motion score $S_v$ (step S5). In addition, based on the vehicle state quantity subjected to filtering, the quick-motion-score calculator 81 calculates a quick motion score $T_v$ (step S6).

Each of the smooth-motion-degree determiner 54 and the quick-motion-degree determiner 55 reads a predetermined typical evaluation criterion from the database 56. Then, each of the smooth-motion-degree determiner 54 and the quick-motion-degree determiner 55 determines an individual driving skill from the smooth motion score $S_v$ and the quick motion score $T_v$ by using the typical evaluation criterion, and stores an evaluation result based on the typical evaluation criterion in the database 56 (step S7).

If the number of evaluation results accumulated in the database 56 does not reach a predetermined number (No in step S8), the process returns to step S1, and the operation described above is repeated.

If the number of evaluation results accumulated in the database 56 becomes the predetermined number or more (Yes in step S8), the individual-driving-skill-criterion setter 23 creates an individual-driving-skill criterion (step S9). The individual-driving-skill criterion is created based on a mean value and a standard deviation that are a statistic of the evaluation results accumulated in the database 56. The created individual-driving-skill criterion is stored in the database 56.

In the manner described above, the individual-driving-skill criterion can be created based on traveling data of the rider himself/herself representing the most recent skill of the rider.

<Control Operation of Individual-driving-skill Evaluation>

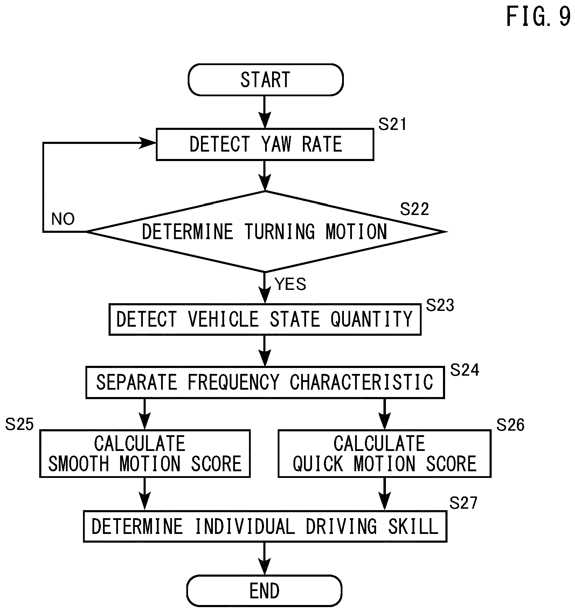

Then, control operation of individual-driving-skill evaluation by the leaning-vehicle-real-time-information-presentation-control apparatus 20 will be described with reference to FIG. 9. FIG. 9 is a flowchart of control operation of individual-driving-skill evaluation.

In the leaning-vehicle-real-time-information-presentation-control apparatus 20, the operation input device 60 is operated by a rider, and evaluation-individual-traveling data is acquired after the driving-skill-criterion-setting-individual-traveling data has been acquired and while the vehicle body 2 is turning. The leaning-vehicle-real-time-information-presentation-control apparatus 20 evaluates the acquired evaluation-individual-traveling data with respect to the individual-driving-skill criterion during traveling of the leaning vehicle 1 to thereby calculate an individual-driving-skill-evaluation result.

During traveling of the leaning vehicle 1, the turning motion determiner 22 acquires a yaw rate of the leaning vehicle 1 detected by the gyro sensor 21a (step S21). Next, the turning motion determiner 22 determines whether the leaning vehicle 1 conducted turning motion or not (step S22). If it is not determined that the leaning vehicle 1 conducted turning motion (No in step S22), a detection value of the yaw rate continues to be taken. If it is determined that the leaning vehicle 1 conducted turning motion (Yes in step S22), the vehicle state quantity is taken from the memory 51 to the component separator 53 (step S23).

Thereafter, the vehicle state quantity is subjected to filtering so that a frequency characteristic of the vehicle state quantity is separated (step S24). By using the vehicle state quantity subjected to filtering, the smooth-motion-score calculator 75 of the vehicle calculates a vehicle-smooth-motion score $S_v$ (step S25). In addition, by using the vehicle state quantity subjected to filtering, the quick-motion-score calculator 81 of the vehicle calculates a vehicle-quick-motion score $T_v$ (S26).

The smooth-motion-degree determiner 54 and the quick-motion-degree determiner 55 read a mean value and a standard deviation stored in the database 56 as an individual-driving-skill criterion. Then, the smooth-motion-degree determiner 54 and the quick-motion-degree determiner 55 standardize the evaluation result by using the mean value and the standard deviation and output the evaluation result on a z-score (z) coordinate (step S27). Thereafter, the leaning-vehicle-real-time-information-presentation-control apparatus 20 finishes the operation of individual-driving-skill evaluation.

In the configuration of this embodiment, the individual-driving-skill criterion is set based on traveling data of the rider himself/herself. Thus, the data volume for acquiring an individual-driving-skill criterion can be reduced so that an increase in a data processing load can be suppressed, and an increase in a processing capacity of hardware can be suppressed. In addition, the individual-driving-skill-evaluation result acquired during traveling is output to at least one of the auditory device, the tactile device, or the vision device while the leaning vehicle 1 is traveling so that a recognition rate of an evaluation result of a driving skill presented during traveling of the leaning vehicle 1 can be enhanced.

In this embodiment, the individual-driving-skill criterion is defined based on a plurality of evaluation results of a rider himself/herself. Thus, an evaluation result corresponding to the current skill of the rider can be obtained as the individual-driving-skill-evaluation result.

In this embodiment, the individual-driving-skill criterion is set based on a skill during traveling of the leaning vehicle 1 or a most recent skill. Evaluation-individual-traveling data of the leaning vehicle is evaluated by using this individual-driving-skill criterion so that an evaluation result with respect to a minute change of an operation input can be obtained, and thus, the rider can easily recognize improvement of the driving skill.

(Other Embodiments)

The embodiment of the present teaching has been described above, but the embodiment is merely an example for carrying out the present teaching. Thus, the present teaching is not limited to the embodiment described above, and the embodiment may be modified as necessary within a range not departing from the gist of the present teaching.

In the embodiment described above, the individual-driving-skill evaluation is conducted based on smooth motion and quick motion of the vehicle. Alternatively, in conducting individual-driving-skill evaluation, other characteristics of a rider may be taken into account. For example, the leaning-vehicle-real-time-information-presentation-control apparatus may be configured to determine smooth motion of the head of a rider. The leaning-vehicle-real-time-information-presentation-control apparatus may use motion of the head of the rider as a criterion for determining a characteristic of the rider on whether the rider can recognize a surrounding situation or not.

Specifically, in a case where a four-wheeled vehicle turns around a corner, a driver hardly leans toward the center of the corner, and thus, the degree of shaking of the head of the driver is small. On the other hand, in a case where the leaning vehicle turns around a corner, the leaning vehicle itself leans toward the center of the corner, and thus, the head of the rider is shaken. The shake of the head of a rider in the leaning vehicle 1 varies depending on driving by the rider. In general, an advanced rider shows a smaller degree of shaking of the head in the pitch direction than a beginner rider.

That is, even when the leaning vehicle turns around the same corner, an advanced rider can suppress small shaking of the head by absorbing variations of the posture of himself/herself. On the other hand, a beginner rider cannot absorb variations of the posture of himself/herself, and the head is shaken in small movements.

In view of this, smooth motion of the head is determined in addition to smooth motion and quick motion of the vehicle so that an individual driving skill of a rider can be precisely evaluated.

The method for detecting motion of the head is specifically described in Japanese Patent No. 5619957, and thus, will not be described here.

In general, as the curvature of a corner increases, the curve becomes sharper. Thus, around a corner having a large curvature, it is difficult for a rider to drive the leaning vehicle 1. In view of this, a corner size is estimated, and a smooth motion score and a quick motion score of the leaning vehicle 1 and a smooth motion score of the head (see Japanese Patent No. 5619957) are corrected in accordance with the estimated corner size so that the influence of the corner size on the smooth motion score and the quick motion score of the leaning vehicle 1 and the smooth motion score of the head obtained in turning around corners having different corner sizes can be reduced.

In addition, in general, as a road-surface-friction coefficient $\mu$ increases, a friction force between the road surface and the front and rear wheels increases, and thus, a rider can easily drive a leaning vehicle. On the other hand, if the road-surface-friction coefficient $\mu$ is small, the front wheel and the rear wheel easily slip during turning of the leaning vehicle, and thus, it is difficult for a rider to drive the leaning vehicle. In this manner, a smooth motion score and a quick motion score of the leaning vehicle 1 and a smooth motion score of the head have a given relationship with the road-surface-friction coefficient $\mu$. Thus, the leaning-vehicle-real-time-information-presentation-control apparatus corrects a smooth motion score and a quick motion score of the leaning vehicle 1 and a smooth motion score of the head in accordance with a road state estimated in the turning motion section Y. Accordingly, a smooth motion score and a quick motion score of the leaning vehicle 1 and a smooth motion score of the head in which influence of the road state is reduced are calculated.

In the case of correcting the smooth motion score and the quick motion score of the leaning vehicle 1 and the smooth motion score of the head in accordance with the corner size and the road state, for example, the smooth motion score and the quick motion score of the leaning vehicle 1 and the smooth motion score of the head are first corrected in accordance with the estimated corner size. Then, the corrected smooth motion score and quick motion score of the leaning vehicle 1 and the corrected smooth motion score of the head are corrected in accordance with the road state.

As described above, the leaning-vehicle-real-time-information-presentation-control apparatus estimates the corner size and the road state and corrects the smooth motion score and the quick motion score of the leaning vehicle 1 and the smooth motion score of the head so that individual-driving-skill evaluation less affected by the corner size and the road state can be acquired.

The method for estimating the corner size and the road state is specifically described in, for example, Japanese Patent No. 5619957, and thus, will not be described here.

The leaning-vehicle-real-time-information-presentation-control apparatus may correct at least one of the smooth motion score, the quick motion score, or the head smooth motion score in accordance with only a corner size or a road state.

In the embodiment described above, the leaning-vehicle-real-time-information-presentation-control apparatus 20 assigns weights to the indexes of a yaw rate, a roll rate, and a pitch rate to obtain a linear sum, and calculates the smooth motion score $S_v$ of the leaning vehicle 1. Alternatively, the leaning-vehicle-real-time-information-presentation-control apparatus may assign a weight only to an index of a yaw rate and calculate the smooth motion score $S_v$. It should be noted that a traveling characteristic of the leaning vehicle 1 can be further reflected by calculating the smooth motion score $S_v$ of the leaning vehicle based on a smooth motion index of not only a yaw rate but also a roll rate or a pitch rate or both of the roll rate and the pitch rate.

In the embodiment described above, the leaning-vehicle-real-time-information-presentation-control apparatus 20 creates the individual-driving-skill criterion based on the smooth motion score $S_v$ and the quick motion score $T_v$ of the leaning vehicle 1, and acquires the individual-driving-skill-evaluation result by using the individual-driving-skill criterion. Alternatively, as described above, the leaning-vehicle-real-time-information-presentation-control apparatus may create an individual-driving-skill criterion by adding smooth motion of the head and present individual-driving-skill-evaluation result by using the individual-driving-skill criterion.

In a case where the leaning-vehicle-real-time-information-presentation-control apparatus according to the embodiment described above is constituted by a smartphone, the leaning-vehicle-real-time-information-presentation-control apparatus may determine a turning motion section by using an incorporated GPS. In the case of determining a turning motion section by using a traveling path of the leaning vehicle obtained by the GPS, the leaning-vehicle-real-time-information-presentation-control apparatus calculates the amount of change of the leaning vehicle in the traveling direction by using GPS data at a given time and GPS data obtained before the given time. In a manner similar to the case of using a yaw rate, the leaning-vehicle-real-time-information-presentation-control apparatus can determine a turning motion section by using the amount of change in the traveling direction.

In the embodiment described above, the individual-driving-skill criterion is calculated from an evaluation result based on the driving-skill-criterion-setting-individual-traveling data. Alternatively, the individual-driving-skill criterion may be obtained by other methods. For example, the database previously stores a driving skill criterion obtained based on plural pieces of traveling data representing driving skill. Then, the leaning-vehicle-real-time-information-presentation-control apparatus may be configured to select, based on the driving-skill-criterion-setting-individual-traveling data, an evaluation criterion from the driving skill criterion obtained based on the previously stored traveling data representing driving skill and set an individual-driving-skill criterion. The individual-driving-skill criterion may be set in both a case where the criterion is calculated based on the evaluation result and a case where the criterion is selected from the plurality of driving skill criteria previously stored. In addition, after a plurality of driving skill criteria are calculated from an evaluation result, the individual-driving-skill criterion may be selected from the calculated plurality of driving skill criteria. As described above, setting of the individual-driving-skill criterion includes creation, selection, and a combination thereof.

The individual-driving-skill criterion is set by selecting an evaluation criterion from the driving skill criterion obtained based on the previously stored traveling data representing driving skill as described above so that a data processing load can be reduced in the leaning-vehicle-real-time-information-presentation-control apparatus. The leaning-vehicle-real-time-information-presentation-control apparatus can change the individual-driving-skill criterion depending on the rider by selecting an evaluation criterion previously determined based on the driving-skill-criterion-setting-individual-traveling data or an individual-driving-skill criterion created based on the driving-skill-criterion-setting-individual-traveling data.

In the embodiment described above, the individual-driving-skill criterion is obtained from a result of evaluation of the driving-skill-criterion-setting-individual-traveling data based on a typical evaluation criterion calculated by using evaluation results of riders in a wide range of driving skill levels. Alternatively, the individual-driving-skill criterion may be obtained by other methods. For example, the individual-driving-skill criterion may be obtained from a result of evaluation of the driving-skill-criterion-setting-individual-traveling data by using a previously determined individual-driving-skill criterion. In this manner, the individual-driving-skill criterion can be a driving skill criterion based on a rider.

INDUSTRIAL APPLICABILITY

The present teaching is applicable to a leaning-vehicle-driving-skill-determination apparatus with enhanced recognition rate of an evaluation result of a driving skill.

REFERENCE SIGNS LIST

| 1 | leaning vehicle |
|---|---|
| 2 | vehicle body |
| 3 | front wheel |
| 4 | rear wheel |
| 8 | power unit (driving source) |
| 15 | output device |
| 15a | monitor |
| 15b | speaker |
| 15c | vibrator |
| 20 | leaning-vehicle-real-time-information-presentation-control apparatus |
| 21 | vehicle state detector |
| 21a | gyro sensor |
| 21b | acceleration sensor |
| 22 | turning motion determiner |
| 23 | individual-driving-skill-criterion setter |
| 24 | individual-driving-skill-evaluation-result creator |
| 25 | output controller |
| 26 | characteristic determiner |
| 51 | memory |
| 53 | component separator |
| 54 | smooth-motion-degree determiner |
| 55 | quick-motion-degree determiner |
| 56 | database |
| 57 | comprehensive determiner |
| 60 | operation input device |
| 65 | low-pass filter |
| 66 | band-pass filter |
| 75 | smooth-motion-score calculator |
| 76 | smooth-motion-arithmetic unit |
| 81 | quick-motion-score calculator |
| 82 | quick-motion-arithmetic unit |

**Claims**

1. A leaning-vehicle-real-time-information-presentation-control apparatus (20) configured to present an evaluation result of a driving skill of a rider during traveling of a leaning vehicle (1), the leaning vehicle (1) including a vehicle body (2) configured to lean leftward when turning to the left and lean rightward when turning to the right and an operation input device (60) configured to be operated by the rider, **characterized by** the leaning-vehicle-real-time-information-presentation-control apparatus (20) comprising:

an individual-driving-skill-criterion setter (23) configured to acquire driving-skill-criterion-setting-individual-traveling data concerning a vehicle state of the leaning vehicle (1) that varies by an operation of the operation input device (60) by the rider during leftward turning in which the vehicle body (2) leans leftward or during rightward turning in which the vehicle body (2) leans rightward, the individual-driving-skill-criterion setter (23) being configured to set an individual-driving-skill criterion representing an individual driving skill based on the acquired driving-skill-criterion-setting-individual-traveling data;

an individual-driving-skill-evaluation-result creator (24) configured to acquire evaluation-individual-traveling data concerning a vehicle state that varies by an operation of the operation input device (60) by the rider after the driving-skill-criterion-setting-individual-traveling data has been acquired and during leftward turning in which the vehicle body (2) leans leftward or during rightward turning in which the vehicle body (2) leans rightward, the individual-driving-skill-evaluation-result creator (24) being configured to evaluate the acquired evaluation-individual-traveling data based on the individual-driving-skill criterion to thereby create an individual-driving-skill-evaluation result of the evaluation during the traveling of the leaning vehicle (1) including leftward turning in which the vehicle body (2) leans leftward or rightward turning in which the vehicle body (2) leans rightward; and

an output controller (25) configured to acquire the individual-driving-skill-evaluation result during the traveling of the leaning vehicle (1) including leftward turning in which the vehicle body (2) leans leftward or rightward turning in which the vehicle body (2) leans rightward, the output controller (25) being configured to output the acquired individual-driving-skill-evaluation result to at least one of an auditory device (15b), a tactile device (15c), or a vision device (15a) during the traveling of the leaning vehicle (1) including leftward turning in which the vehicle body (2) leans leftward or rightward turning in which the vehicle body (2) leans rightward.

2. The leaning-vehicle-real-time-information-presentation-control apparatus (20) according to claim 1, wherein
the individual-driving-skill-criterion setter (23) is configured to set the individual-driving-skill criterion based on at least one evaluation result of the driving-skill-criterion-setting-individual-traveling data.

3. The leaning-vehicle-real-time-information-presentation-control apparatus (20) according to claim 2, wherein
the individual-driving-skill-criterion setter (23) is configured to set the individual-driving-skill criterion based on a plurality of evaluation results of the driving-skill-criterion-setting-individual-traveling data.

4. The leaning-vehicle-real-time-information-presentation-control apparatus (20) according to any one of claims 1 to 3, wherein
the individual-driving-skill-criterion setter (23) is configured to set the individual-driving-skill criterion based on the driving-skill-criterion-setting-individual-traveling data acquired during the traveling of the leaning vehicle (1) or acquired during traveling of the leaning vehicle (1) before the traveling.

5. The leaning-vehicle-real-time-information-presentation-control apparatus (20) according to any one of claims 1 to 4, wherein
the individual-driving-skill-criterion setter (23) is configured to select the individual-driving-skill criterion from previously stored driving skill criteria representing driving skill based on the driving-skill-criterion-setting-individual-traveling data, or to set the individual-driving-skill criterion based on an evaluation result created based on the driving-skill-criterion-setting-individual-traveling data.

6. The leaning-vehicle-real-time-information-presentation-control apparatus (20) according to any one of claims 1 to 4, wherein
the individual-driving-skill-criterion setter (23) is configured to set the individual-driving-skill criterion based on an evaluation result of evaluation on the driving-skill-criterion-setting-individual-traveling data by using a previously set individual-driving-skill criterion.

7. The leaning-vehicle-real-time-information-presentation-control apparatus (20) according to any one of claims 1 to 6, wherein
the output controller (25) is configured to output the individual-driving-skill-evaluation result acquired during the traveling of the leaning vehicle (1) to at least one of the auditory device (15b), the tactile device (15c), or the vision device (15a) during the traveling of the leaning vehicle (1), by means of information except for a numerical value.

8. The leaning-vehicle-real-time-information-presentation-control apparatus (20) according to any one of claims 1 to 6, wherein
the output controller (25) is configured to output the individual-driving-skill-evaluation result acquired during the traveling of the leaning vehicle (1) to at least one of the auditory device (15b), the tactile device (15c), or the vision device (15a) after the individual-driving-skill-evaluation result has been acquired and before the leaning vehicle (1) enters a next turning state in the traveling of the leaning vehicle (1).

9. The leaning-vehicle-real-time-information-presentation-control apparatus (20) according to any one of claims 1 to 6, wherein
the output controller (25) is configured to output the individual-driving-skill-evaluation result acquired during the traveling of the leaning vehicle (1) to at least one of the auditory device (15b), the tactile device (15c), or the vision device (15a) from a turning state to a next turning state in the traveling of the leaning vehicle (1).

10. The leaning-vehicle-real-time-information-presentation-control apparatus (20) according to any one of claims 1 to 9, further comprising:
a vehicle state detector (21) configured to detect a vehicle state of the leaning vehicle (1); and
a turning motion determiner (22) configured to determine whether the leaning vehicle (1) is turning or not, based on a detection result of the vehicle state detector (21).

## Patentansprüche

1. Eine Neigungsfahrzeug-Echtzeitinformationspräsentation-Steuervorrichtung (20), die konfiguriert ist, ein Auswertungsergebnis eines Fahrkönnens eines Fahrers während des Fahrens eines Neigungsfahrzeugs (1) zu präsentieren, wobei das Neigungsfahrzeug (1) einen Fahrzeugkörper (2), der konfiguriert ist, sich beim Abbiegen nach links nach links zu neigen und beim Abbiegen nach rechts nach rechts zu neigen, und eine Betätigungseingabevorrichtung (60) umfasst, die konfiguriert ist, durch den Fahrer betätigt zu werden, **dadurch gekennzeichnet, dass** die Neigungsfahrzeug-Echtzeitinformationspräsentation-Steuervorrichtung (20) folgende Merkmale aufweist:

einen Individuelles-Fahrkönnen-Kriterium-Einsteller (23), der konfiguriert ist, individuelle Fahrkönnen-Kriterium-Einstellung-Fahrdaten zu erfassen, die sich auf einen Fahrzeugzustand des Neigungsfahrzeugs (1) beziehen, der variiert durch eine Betätigung der Betätigungseingabevorrichtung (60) durch den Fahrer während eines Linksabbiegens, bei dem sich der Fahrzeugkörper (2) nach links neigt, oder während eines Rechtsabbiegens, bei dem sich der Fahrzeugkörper (2) nach rechts neigt, wobei der Individuelles-Fahrkönnen-Kriterium-Einsteller (23) konfiguriert ist, ein Individuelles-Fahrkönnen-Kriterium, das ein individuelles Fahrkönnen darstellt, basierend auf den erfassten individuellen Fahrkönnen-Kriterium-Einstellung-Fahrdaten einzustellen;
einen Individuelles-Fahrkönnen-Auswertungsergebnis-Erzeuger (24), der konfiguriert ist, individuelle Auswertungsfahrdaten zu erfassen, die sich auf einen Fahrzeugzustand beziehen, der variiert durch eine Betätigung der Betätigungseingabevorrichtung (60) durch den Fahrer, nachdem die individuellen Fahrkönnen-Kriterium-Einstellung-Fahrdaten erfasst wurden, und während eines Linksabbiegens, bei dem sich der Fahrzeugkörper (2) nach links neigt, oder während eines Rechtsabbiegens, bei dem sich der Fahrzeugkörper (2) nach rechts neigt, wobei der Individuelles-Fahrkönnen-Auswertungsergebnis-Erzeuger (24) konfiguriert ist, die erfassten individuellen Auswertungsfahrdaten basierend auf dem Individuelles-Fahrkönnen-Kriterium auszuwerten, um dadurch ein Individuelles-Fahrkönnen-Auswertungsergebnis der Auswertung während des Fahrens des Neigungsfahrzeugs (1) zu erzeugen, einschließlich eines Linksabbiegens, bei dem sich der Fahrzeugkörper (2) nach links neigt, oder eines Rechtsabbiegens, bei dem sich der Fahrzeugkörper (2) nach rechts neigt; und
eine Ausgabesteuerung (25), die konfiguriert ist, das Individuelles-Fahrkönnen-Auswertungsergebnis während des Fahrens des Neigungsfahrzeugs (1) zu erfassen, einschließlich eines Linksabbiegens, bei dem sich der Fahrzeugkörper (2) nach links neigt, oder eines Rechtsabbiegens, bei dem sich der Fahrzeugkörper (2) nach rechts neigt, wobei die Ausgabesteuerung (25) konfiguriert ist, das erfasste Individuelles-Fahrkönnen-Auswertungsergebnis während des Fahrens des Neigungsfahrzeugs (1), einschließlich eines Linksabbiegens, bei dem sich der Fahrzeugkörper (2) nach links neigt, oder eines Rechtsabbiegens, bei dem sich der Fahrzeugkörper (2) nach rechts neigt, an zumindest eine einer Hörvorrichtung (15b), einer Tastvorrichtung (15c) oder einer Sehvorrichtung (15a) auszugeben.

2. Die Neigungsfahrzeug-Echtzeitinformationspräsentation-Steuervorrichtung (20) gemäß Anspruch 1, bei der
der Individuelles-Fahrkönnen-Kriterium-Einsteller (23) konfiguriert ist, das Individuelles-Fahrkönnen-Kriterium basierend auf zumindest einem Auswertungsergebnis der individuellen Fahrkönnen-Kriterium-Einstellung-Fahrdaten einzustellen.

3. Die Neigungsfahrzeug-Echtzeitinformationspräsentation-Steuervorrichtung (20) gemäß Anspruch 2, bei der
der Individuelles-Fahrkönnen-Kriterium-Einsteller (23) konfiguriert ist, das Individuelles-Fahrkönnen-Kriterium basierend auf einer Mehrzahl von Auswertungsergebnissen der individuellen Fahrkönnen-Kriterium-Einstellung-Fahrdaten einzustellen.

4. Die Neigungsfahrzeug-Echtzeitinformationspräsentation-Steuervorrichtung (20) gemäß einem der Ansprüche 1 bis 3, bei der
der Individuelles-Fahrkönnen-Kriterium-Einsteller (23) konfiguriert ist, das Individuelles-Fahrkönnen-Kriterium basierend auf den individuellen Fahrkönnen-Kriterium-Einstellung-Fahrdaten einzustellen, die während des Fahrens des Neigungsfahrzeugs (1) erfasst werden, oder während des Fahrens des Neigungsfahrzeugs (1) vor dem Fahren erfasst werden.

5. Die Neigungsfahrzeug-Echtzeitinformationspräsentation-Steuervorrichtung (20) gemäß einem der Ansprüche 1 bis 4, bei der
der Individuelles-Fahrkönnen-Kriterium-Einsteller (23) konfiguriert ist, das Individuelles-Fahrkönnen-Kriterium von vorher gespeicherten Fahrkönnen-Kriterien auszuwählen, die Fahrkönnen darstellen, das auf den individuellen Fahrkönnen-Kriterium-Einstellung-Fahrdaten basiert, oder das Individuelles-Fahrkönnen-Kriterium basierend auf einem Auswertungsergebnis einzustellen, das basierend auf den individuellen Fahrkönnen-Kriterium-Einstellung-Fahrdaten erzeugt wird.

6. Die Neigungsfahrzeug-Echtzeitinformationspräsentation-Steuervorrichtung (20) gemäß einem der Ansprüche 1 bis 4, bei der
der Individuelles-Fahrkönnen-Kriterium-Einsteller (23) konfiguriert ist, das Individuelles-Fahrkönnen-Kriterium basierend auf einem Auswertungsergebnis einer Auswertung der individuellen Fahrkönnen-Kriterium-Einstellung-Fahrdaten einzustellen, durch Verwenden eines vorher eingestellten Individuelles-Fahrkönnen-Kriteriums.

7. Die Neigungsfahrzeug-Echtzeitinformationspräsentation-Steuervorrichtung (20) gemäß einem der Ansprüche 1 bis 6, bei der
die Ausgabesteuerung (25) konfiguriert ist, das Individuelles-Fahrkönnen-Auswertungsergebnis, das während des Fahrens des Neigungsfahrzeugs (1) erfasst wird, während des Fahrens des Neigungsfahrzeugs (1) an zumindest eine der Hörvorrichtung (15b), der Tastvorrichtung (15c) oder der Sehvorrichtung (15a) auszugeben, mit Hilfe von Informationen mit Ausnahme eines numerischen Werts.

8. Die Neigungsfahrzeug-Echtzeitinformationspräsentation-Steuervorrichtung (20) gemäß einem der Ansprüche 1 bis 6, bei der
die Ausgabesteuerung (25) konfiguriert ist, das Individuelles-Fahrkönnen-Auswertungsergebnis, das während des Fahrens des Neigungsfahrzeugs (1) erfasst wird, an zumindest eine der Hörvorrichtung (15b), der Tastvorrichtung (15c) oder der Sehvorrichtung (15a) auszugeben, nachdem das Individuelles-Fahrkönnen-Auswertungsergebnis erfasst wurde, und bevor das Neigungsfahrzeug (1) bei dem Fahren des Neigungsfahrzeugs (1) in einen nächsten Abbiegezustand eintritt.

9. Die Neigungsfahrzeug-Echtzeitinformationspräsentation-Steuervorrichtung (20) gemäß einem der Ansprüche 1 bis 6, bei der
die Ausgabesteuerung (25) konfiguriert ist, das Individuelles-Fahrkönnen-Auswertungsergebnis, das während des Fahrens des Neigungsfahrzeugs (1) erfasst wird, von einem Abbiegezustand zu einem nächsten Abbiegezustand bei dem Fahren des Neigungsfahrzeugs (1) an zumindest eine der Hörvorrichtung (15b), der Tastvorrichtung (15c) oder der Sehvorrichtung (15a) auszugeben.

10. Die Neigungsfahrzeug-Echtzeitinformationspräsentation-Steuervorrichtung (20) gemäß einem der Ansprüche 1 bis 9, die ferner folgende Merkmale aufweist:

   einen Fahrzeugzustandsdetektor (21), der konfiguriert ist, einen Fahrzeugzustand des Neigungsfahrzeugs (1) zu erfassen; und
   einen Abbiegebewegungsbestimmer (22), der konfiguriert ist, zu bestimmen, ob das Neigungsfahrzeug (1) abbiegt oder nicht, basierend auf einem Erfassungsergebnis des Fahrzeugzustandsdetektors (21).

**Revendications**

1. Appareil de commande de présentation d'informations en temps réel de véhicule à inclinaison (20) configuré pour présenter un résultat d'évaluation d'une compétence de conduite d'un conducteur pendant le déplacement d'un véhicule à inclinaison (1), le véhicule à inclinaison (1) comportant une carrosserie de véhicule (2) configurée pour s'incliner vers la gauche lors d'un virage à gauche et vers la droite lors d'un virage à droite et un dispositif d'entrée d'actionnement (60) configuré pour être actionné par le conducteur,
**caractérisé par le fait que** l'appareil de commande de présentation d'informations en temps réel de véhicule à inclinaison (20) comprend:

un moyen de réglage de critère de compétence de conduite individuelle (23) configuré pour acquérir les données de conduite individuelle réglant le critère de compétence de conduite relatives à un état du véhicule à inclinaison (1) qui varie par un actionnement du dispositif d'entrée d'actionnement (60) par le conducteur pendant le virage à gauche où la carrosserie de véhicule (2) s'incline vers la gauche ou pendant un virage à droite où la carrosserie du véhicule (2) s'incline vers la droite, le moyen de réglage de critère de compétence de conduite individuelle (23) étant configuré pour régler un critère de compétence de conduite individuelle représentant une compétence de conduite individuelle sur base des données de déplacement individuel de réglage de critère de compétence de conduite acquises; un moyen de création de résultat d'évaluation de compétence de conduite individuelle (24) configuré pour acquérir les données d'évaluation de déplacement individuel relatives à un état de véhicule qui varie par un actionnement du dispositif d'entrée d'actionnement (60) par le conducteur après que les données de déplacement individuel de réglage de critère de compétence de conduite ont été acquises et pendant le virage à gauche où la carrosserie du véhicule (2) s'incline vers la gauche ou pendant le virage à droite où la carrosserie du véhicule (2) s'incline vers la droite, le moyen de création de résultat d'évaluation de compétence de conduite individuelle (24) étant configuré pour évaluer les données d'évaluation de déplacement individuel acquises sur base du critère de compétence de conduite individuelle pour créer ainsi un résultat d'évaluation de compétence de conduite individuelle de l'évaluation pendant le déplacement du véhicule à inclinaison (1) comportant le virage à gauche où la carrosserie de véhicule (2) s'incline vers la gauche ou le virage à droite où la carrosserie de véhicule (2) s'incline vers la droite; et un moyen de commande de sortie (25) configuré pour acquérir le résultat d'évaluation de compétence de conduite individuelle pendant le déplacement du véhicule à inclinaison (1) comportant le virage à gauche où la carrosserie de véhicule (2) s'incline vers la gauche ou le virage à droite où la carrosserie de véhicule (2) s'incline vers la droite, le moyen de commande de sortie (25) étant configuré pour sortir le résultat d'évaluation de compétence de conduite individuelle acquis vers au moins l'un parmi un dispositif auditif (15b), un dispositif tactile (15c) ou un dispositif de vision (15a) pendant le déplacement du véhicule à inclinaison (1) comportant le virage à gauche où la carrosserie de véhicule (2) s'incline vers la gauche ou un virage à droite où la carrosserie de véhicule (2) s'incline vers la droite.

2. Appareil de commande de présentation d'informations en temps réel de véhicule à inclinaison (20) selon la revendication 1, dans lequel
le moyen de réglage de critère de compétence de conduite individuelle (23) est configuré pour régler le critère de compétence de conduite individuelle sur base d'au moins un résultat d'évaluation des données de réglage de critère de compétence de conduite individuelle.

3. Appareil de commande de présentation d'informations en temps réel de véhicule à inclinaison (20) selon la revendication 2, dans lequel
le moyen de réglage de critère de compétence de conduite individuelle (23) est configuré pour régler le critère de compétence de conduite individuelle sur base d'une pluralité de résultats d'évaluation des données de réglage de critère de compétence de conduite individuelle.

4. Appareil de commande de présentation d'informations en temps réel de véhicule à inclinaison (20) selon l'une quelconque des revendications 1 à 3, dans lequel
le moyen de réglage de critère de compétence de conduite individuelle (23) est configuré pour régler le critère de compétence de conduite individuelle sur base des données de conduite individuelle de réglage de critère de compétence acquises pendant le déplacement du véhicule à inclinaison (1) ou acquises pendant le déplacement du véhicule à inclinaison (1) avant le déplacement.

5. Appareil de commande de présentation d'informations en temps réel de véhicule à inclinaison (20) selon l'une quelconque des revendications 1 à 4, dans lequel
le moyen de réglage de critère de compétence de conduite individuelle (23) est configuré pour sélectionner le critère de compétence de conduite individuelle parmi les critères de compétence de conduite mémorisés auparavant représentant la compétence de conduite sur base des données de déplacement individuel de réglage de critère de compétence de conduite, ou pour régler le critère de compétence de conduite individuelle sur base d'un résultat d'évaluation créé sur base des données de déplacement individuel de réglage de critère de compétence de conduite.

6. Appareil de commande de présentation d'informations en temps réel de véhicule à inclinaison (20) selon l'une quelconque des revendications 1 à 4, dans lequel
le moyen de réglage de critère de compétence de conduite individuelle (23) est configuré pour régler le critère de compétence de conduite individuelle sur base d'un résultat d'évaluation de l'évaluation sur les données de conduite individuelle de réglage de critère de compétence à l'aide d'un critère de compétence de conduite individuelle réglé auparavant.

7. Appareil de commande de présentation d'informations en temps réel de véhicule à inclinaison (20) selon l'une quelconque des revendications 1 à 6, dans lequel

le moyen de commande de sortie (25) est configuré pour sortir le résultat d'évaluation de compétence de conduite individuelle acquis pendant le déplacement du véhicule à inclinaison (1) vers au moins l'un parmi le dispositif auditif (15b), le dispositif tactile (15c) ou le dispositif de vision (15a) pendant le déplacement du véhicule à inclinaison (1), au moyen des informations, à l'exception d'une valeur numérique.

8. Appareil de commande de présentation d'informations en temps réel de véhicule à inclinaison (20) selon l'une quelconque des revendications 1 à 6, dans lequel

le moyen de commande de sortie (25) est configuré pour sortir le résultat d'évaluation de compétence de conduite individuelle acquis pendant le déplacement du véhicule à inclinaison (1) vers au moins l'un parmi le dispositif auditif (15b), le dispositif tactile (15c) ou le dispositif de vision (15a) après que le résultat d'évaluation de compétence de conduite individuelle a été acquis et avant que le véhicule à inclinaison (1) n'entre dans un état de virage suivant lors du déplacement du véhicule à inclinaison (1).

9. Appareil de commande de présentation d'informations en temps réel de véhicule à inclinaison (20) selon l'une quelconque des revendications 1 à 6, dans lequel

le moyen de commande de sortie (25) est configuré pour sortir le résultat d'évaluation de compétence de conduite individuelle acquis pendant le déplacement du véhicule à inclinaison (1) vers au moins l'un parmi le dispositif auditif (15b), le dispositif tactile (15c) ou le dispositif de vision (15a), d'un état de virage à un état de virage suivant lors du déplacement du véhicule à inclinaison (1).

10. Appareil de commande de présentation d'informations en temps réel de véhicule à inclinaison (20) selon l'une quelconque des revendications 1 à 9, comprenant par ailleurs:

un détecteur d'état de véhicule (21) configuré pour détecter un état de véhicule du véhicule à inclinaison (1); et
un moyen de détermination de mouvement de virage (22) configuré pour déterminer si le véhicule à inclinaison (1) vire ou non, sur base d'un résultat de détection du détecteur d'état de véhicule (21).

FIG. 1

FIG. 2

FIG. 3

FIG. 4

FIG. 5

FIG. 6

FIG. 7

FIG. 8

```
                    ┌─────────────────┐
                    │      START      │
                    └─────────────────┘
                             │
         ┌───────────────────┼───────────────────────────────┐
         │                   ▼                                │
         │        ┌──────────────────────┐ S1                │
         │        │   DETECT YAW RATE     │                   │
         │        └──────────────────────┘                    │
         │                   │                                │
         │                   ▼                                │
    NO   │              DETERMINE TURNING MOTION  S2          │
    ◄────◄                                                    │
         │                   │ YES                            │
         │                   ▼                                │
         │     ┌──────────────────────────────┐ S3           │
         │     │ DETECT VEHICLE STATE QUANTITY │              │
         │     └──────────────────────────────┘              │
         │                   │                                │
         │                   ▼                                │
         │   ┌──────────────────────────────────┐ S4         │
         │   │ SEPARATE FREQUENCY CHARACTERISTIC │            │
         │   └──────────────────────────────────┘            │
         │          │                    │                    │
     S5  │          ▼                    ▼         S6         │
         │   ┌──────────────┐     ┌──────────────┐           │
         │   │  CALCULATE   │     │  CALCULATE   │           │
         │   │SMOOTH MOTION │     │ QUICK MOTION │           │
         │   │    SCORE     │     │    SCORE     │           │
         │   └──────────────┘     └──────────────┘           │
         │          │                    │          S7        │
         │          ▼                    ▼                    │
         │ ┌────────────────────────────────────────────────┐│
         │ │ EVALUATION RESULT BASED ON TYPICAL EVALUATION  ││
         │ │                  CRITERION                     ││
         │ └────────────────────────────────────────────────┘│
         │                   │                                │
         │                   ▼                                │
         │        PREDETERMINED NUMBER ACQUIRED?  S8    NO    │
         └────────────────────────────────────────────────────┘
                             │ YES
                             ▼
             ┌──────────────────────────────────────────┐ S9
             │ CREATE INDIVIDUAL-DRIVING-SKILL CRITERION │
             └──────────────────────────────────────────┘
                             │
                             ▼
                    ┌─────────────────┐
                    │       END       │
                    └─────────────────┘
```

FIG. 9

```
                    ┌──────────────┐
                    │    START     │
                    └──────┬───────┘
                           │
                           ▼
                    ┌──────────────┐  S21
          ┌────────▶│ DETECT YAW RATE │
          │         └──────┬───────┘
          │                │
          │                ▼
          │         ╱────────────────────╲   S22
     NO   │        ╱  DETERMINE TURNING    ╲
   ◀──────┴───────◀        MOTION           ▶
                   ╲                        ╱
                    ╲──────────┬──────────╱
                               │ YES
                               ▼
                    ┌──────────────────────────┐ S23
                    │ DETECT VEHICLE STATE QUANTITY │
                    └──────────┬───────────────┘
                               │
                               ▼
                    ┌──────────────────────────┐ S24
                    │ SEPARATE FREQUENCY CHARACTERISTIC │
                    └────┬─────────────────┬───┘
         S25             │                 │           S26
          ┌──────────────▼───┐     ┌───────▼──────────┐
          │    CALCULATE     │     │    CALCULATE     │
          │ SMOOTH MOTION SCORE │   │ QUICK MOTION SCORE │
          └──────────┬───────┘     └───────┬──────────┘
                     │                     │
                     ▼                     ▼           S27
          ┌──────────────────────────────────────┐
          │ DETERMINE INDIVIDUAL DRIVING SKILL    │
          └──────────────────┬───────────────────┘
                             │
                             ▼
                    ┌──────────────┐
                    │     END      │
                    └──────────────┘
```

FIG. 10

**REFERENCES CITED IN THE DESCRIPTION**

**Patent documents cited in the description**

- JP 6146865 B
- WO 2013099246 A

- JP 5619957 B